(19) Europäisches Patentamt
European Patent Office
Office européen des brevets

(11) **EP 4 102 831 A1**

(12) # EUROPEAN PATENT APPLICATION
published in accordance with Art. 153(4) EPC

(43) Date of publication:
**14.12.2022 Bulletin 2022/50**

(51) International Patent Classification (IPC):
***H04N 5/64*** *(2006.01)*    ***G02B 27/02*** *(2006.01)*

(21) Application number: **21775172.6**

(52) Cooperative Patent Classification (CPC):
**G02B 27/02; H04N 5/64**

(22) Date of filing: **22.02.2021**

(86) International application number:
**PCT/JP2021/006533**

(87) International publication number:
**WO 2021/192774 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020 JP 2020057816**

(71) Applicant: **Sony Semiconductor Solutions Corporation**
**Atsugi-shi Kanagawa 243-0014 (JP)**

(72) Inventor: **SUZUKI, Takaharu**
**Atsugi-shi, Kanagawa 243-0014 (JP)**

(74) Representative: **D Young & Co LLP**
**120 Holborn**
**London EC1N 2DY (GB)**

(54) **DISPLAY DEVICE**

(57)     According to the present disclosure, there is provided a display device including: an eyepiece optical device 40; an image display device 10 including an image forming device 20 and a transfer optical device 30 that emits an image incident from the image forming device 20 to the eyepiece optical device 40; and a placement unit 100 on which the image display device 10 is placed, in which the eyepiece optical device 40 and the image display device 10 are arranged to be spatially separated from each other, the eyepiece optical device 40 forms an image from the transfer optical device 30 on a retina of an observer 70, and when moving directions of the placement unit 100 corresponding to a horizontal direction, a vertical direction, and a depth direction of the image formed on the retina of the observer 70 are defined as an X direction, a Y direction, and a Z direction, the placement unit 100 is capable of moving the image display device 10 in at least one of the X direction, the Y direction, and the Z direction.

FIG. 1

**Description**

TECHNICAL FIELD

The present disclosure relates to a display device.

BACKGROUND ART

A head mounting type image display device to be mounted on the head of an observer is known from, for example, Japanese Patent Application Laid-Open No. 2005-309264. An image display device 1 disclosed in this patent publication includes a head mounting unit 6 mounted on the head of an observer and a body carrying unit 7 carried by the body of the observer. The head mounting unit 6 is provided with a convex lens 8 constituting a transfer optical system 5 and a part of an azimuth/distance detection system. The head mounting unit 6 includes a light emitting unit R configured with an infrared LED, and an actuator 27 and a drive circuit 28 for moving the convex lens 8.

CITATION LIST

PATENT DOCUMENT

Patent Document 1: Japanese Patent Application Laid-Open No. 2005-309264

SUMMARY OF THE INVENTION

PROBLEMS TO BE SOLVED BY THE INVENTION

Incidentally, the technology disclosed in the above-described patent publication provides a structure in which a burden is imposed on the observer such as an increase in mass or size of the head mounting unit 6 because a power source (battery) is required for the light emitting unit R, the actuator 27, and the drive circuit 28 provided in the head mounting unit 6. In a case where it is assumed that the light emitting unit R, the actuator 27, and the drive circuit 28 are removed and only the convex lens 8 is mounted on the head mounting unit 6, when the observer moves, the positional relationship between the body carrying unit and the head mounting unit collapses, and the projected image deviates from the pupil of the observer, resulting in a problem that it is difficult to observe the image.
Therefore, an object of the present disclosure is to provide a display device having a configuration and a structure that do not impose a burden on an observer.

SOLUTIONS TO PROBLEMS

According to the present disclosure for achieving the above object, there is provided a display device including:

an eyepiece optical device;
an image display device including an image forming device and a transfer optical device that emits an image incident from the image forming device to the eyepiece optical device; and
a placement unit on which the image display device is placed, in which
the eyepiece optical device and the image display device are arranged to be spatially separated from each other,
the eyepiece optical device forms an image from the transfer optical device on a retina of an observer, and
when a horizontal direction of the image formed on the retina of the observer is defined as a $\zeta$ direction, a vertical direction of the image is defined as an $\eta$ direction, a depth direction of the image is defined as a $\xi$ direction, a moving direction of the placement unit corresponding to the $\zeta$ direction is defined as an X direction, a moving direction of the placement unit corresponding to the $\eta$ direction is defined as a Y direction, and a moving direction of the placement unit corresponding to the $\xi$ direction is defined as a Z direction, the placement unit is capable of moving the image display device in at least one of the X direction, the Y direction, and the Z direction.

BRIEF DESCRIPTION OF DRAWINGS

Fig. 1 is a conceptual diagram of a display device according to Example 1.
Fig. 2 is a schematic view of an observer wearing an eyepiece optical device constituting the display device according to Example 1 when viewed from the front.
Fig. 3 is a perspective view of a placement unit and the like constituting the display device according to Example 1.
Figs. 4A, 4B, and 4C are conceptual diagrams of an image forming device in the display device according to Example 1.
Fig. 5 is a conceptual diagram illustrating position detection light in a light receiving unit.
Fig. 6 is a conceptual diagram of a display device according to Example 3.
Figs. 7A and 7B are schematic views illustrating a state where the display device according to Example 3 is used in a room and an image display device is disposed on a back surface of a back of a seat.
Fig. 8 is a view for describing an example in which the image display device according to Example 3 is mounted on a motorcycle.
Fig. 9 is a conceptual diagram of a display device according to Example 4.
Fig. 10 is a conceptual diagram of the eyepiece optical device and the like for realizing observation of an image by retinal direct drawing.
(A) and (B) of Fig. 11 are views conceptually illustrating light incident on a pupil of the observer.

MODE FOR CARRYING OUT THE INVENTION

Hereinafter, the present disclosure will be described on the basis of examples with reference to the drawings, but the present disclosure is not limited to these examples, and the various numerical values and materials in the examples are examples. Note that the description will be given in the following order.

1. General description of display device of present disclosure
2. Example 1 (display device of present disclosure)
3. Example 2 (modification of Example 1)
4. Example 3 (modification of Examples 1 and 2)
5. Example 4 (modification of Examples 1 to 3)
6. Others

<General description of display device of present disclosure>

In the following description, light emitted from an image forming device is referred to as "image forming light" for convenience, light emitted from the center of the image forming device is referred to as "image forming center light" for convenience, light emitted from a light source (as described later) is referred to as "position detection light" for convenience, and light emitted from the center of the light source is referred to as "position detection center light" for convenience.

In the display device of the present disclosure, a placement unit may be capable of moving an image display device at least in the X direction and the Z direction. In addition, in this case, the display device may include a first position detection device that detects a position of an eyepiece optical device, and the placement unit may move the image display device on the basis of the position information of the observer (including position information of a pupil of the observer or position information of the head of the observer, the similar applies to the following) or position information of eyepiece optical device, which is obtained by the first position detection device. Furthermore, the first position detection device may include a camera (imaging device) or a time of flight (TOF) sensor (that is, a TOF type distance measurement device or an indirect TOF type distance measurement device).

In the display device of the present disclosure including the various preferable aspects described above, the image display device may further include a transfer optical device/control device, and the transfer optical device/control device may control the transfer optical device such that the image emitted from the image forming device reaches the eyepiece optical device. In addition, in this case, the image display device may further include a second position detection device that detects the position of the eyepiece optical device, and the transfer optical device/control device may control the transfer optical device such that the image emitted from the image forming device reaches the eyepiece optical device on the basis of the position information of the eyepiece optical device detected by the second position detection device.

Furthermore, in the display device of the present disclosure including the various preferable aspects described above, the transfer optical device may include a movable mirror.

As described above, the transfer optical device for controlling the projection angle of the image and finally forming the image on the retina of the observer may include the movable mirror, but specifically, for example, may include a combination of two galvano mirrors. In other words, in order to move light (image forming light) directed from the transfer optical device to the eyepiece optical device in the X direction and/or the Y direction, examples of the transfer optical device include a two-axis gimbal mirror including a two-axis micro electro mechanical systems (MEMS) mirror in addition to a mirror movable in two directions (specifically, a combination of two galvano mirrors).

The resolution of the eye is high, and if the transfer optical device is not caused to follow the movement of the eyepiece optical device with high resolution, the observed image vibrates and becomes unfit for observation. Therefore, it is necessary to control the movement of the transfer optical device such that the displacement amount (vibration amount) by which the image formed on the retina of the observer moves is, for example, 80 $\mu$m or less. For this purpose, the mechanism that moves the transfer optical device is preferably a drive transmission system without backlash or angular velocity fluctuation, and a drive mechanism without angular velocity fluctuation, such as a voice coil motor (VCM), a harmonic drive (registered trademark), a crown gear, a traction drive, or an ultrasonic motor, is suitable. In addition, in a case where the display device of the present disclosure is used in a vibrating environment such as attachment to a vehicle such as an automobile or a motorcycle, a drive mechanism having excellent responsiveness such as a VCM, a harmonic drive, or a traction drive is more suitable. The type in which the transfer optical device is moved by the gear is not suitable because there is backlash, drive loss, tooth contact, and the like.

Usually, in a case where the transfer optical device is caused to follow the eyepiece optical device attached to glasses or the like, it is sufficient if responsiveness with an amplitude of 30 mm and 4 Hz is secured. Meanwhile, for use of the display device in a vibrating environment such as a vehicle, it is preferable to be able to secure responsiveness with an amplitude of 2 mm and 100 Hz. Therefore, the image forming device, the second position detection device, and the transfer optical device are required to have an image update speed of 100 Hz or more and a resolution and followability at which the movement of 80 $\mu$m or less at a position away from the image display device can be recognized.

Furthermore, in the display device of the present disclosure including the various preferable aspects described above, the eyepiece optical device may be movable with respect to the placement unit.

Specifically, the placement unit may include a placement table on which the transfer optical device is placed, and may further include, for example, at least one type of moving mechanism among an X-direction moving mechanism that moves the placement table in the X direction, a Z-direction moving mechanism that moves the placement table in the Z direction, and a Y-direction moving mechanism that moves the transfer optical device placed on the placement table in the Y direction. In other words, the placement unit includes a maximum three-axis moving mechanism. Furthermore, the placement unit may also include at least one type of rotation mechanism among an X-direction rotation mechanism that rotates the transfer optical device placed on the placement table about an axis extending in parallel to the X direction (referred to as an X axis), a Z-direction rotation mechanism that rotates the transfer optical device placed on the placement table about an axis extending in parallel to the Z direction (referred to as a Z axis), and a Y-direction rotation mechanism that rotates the transfer optical device placed on the placement table about an axis extending in parallel to the Y direction (referred to as a Y-axis). In other words, the placement unit includes a maximum three-axis rotation mechanism. Each of the X-direction moving mechanism and the Z-direction moving mechanism may include, for example, a motor disposed on the placement unit, a first guide unit disposed on the placement unit, and a second guide unit attached to the placement table and slidable along the first guide unit. In the X-direction moving mechanism, the rotation of the motor is transmitted to the first guide unit, and the second guide unit slidably attached to the first guide unit freely slides (moves) in the X direction along the first guide unit with the movement of the first guide unit, and moves the placement table and the transfer optical device in the X direction. Similarly, in the Z-direction moving mechanism, the rotation of the motor is transmitted to the first guide unit, and the second guide unit slidably attached to the first guide unit freely slides (moves) in the Z direction along the first guide unit with the movement of the first guide unit, and moves the placement table and the transfer optical device in the Z direction. The Y-direction moving mechanism may include, for example, a motor disposed on the placement table, a guide unit disposed on the placement table and having the transfer optical device attached thereto, and a transmission mechanism connecting the motor and the guide unit to each other. In the Y-direction moving mechanism, the rotation of the motor is transmitted to the guide unit via the transmission mechanism, and the transfer optical device attached to the guide unit freely slides (moves) in the Y direction with the movement of the guide unit.

Furthermore, in the display device of the present disclosure including the various preferable aspects described above, the eyepiece optical device may be worn by an observer, and in this case, the eyepiece optical device may include a hologram lens. Note that the eyepiece optical device may be arranged at a position away from the observer (that is, the eyepiece optical device may not be worn by the observer).

In addition, the eyepiece optical device and the image display device may be relatively movable. In other words, the image display device may be arranged at a position away from the observer, or may be arranged at a site of the observer away from the head of the observer. In the latter case, although not limited, for example, the image display device is worn as a wearable device at a site such as the wrist of the observer away from the head of the observer. Otherwise, the image display device is arranged in a personal computer or is arranged to be connected to the personal computer. Alternatively, the image display device is disposed in an external facility or the like as will be described later.

As described above, the eyepiece optical device and the image display device are arranged spatially separately, but specifically, the eyepiece optical device and the image display device are arranged to be separated from each other, and are not integrally connected.

As described above, the eyepiece optical device may include a hologram element, the eyepiece optical device may include a diffractive optical member, or the eyepiece optical device may include a light condensing member and a deflection member. In a case where the eyepiece optical device includes a hologram element, the hologram element may have a light condensing function. The image forming light emitted from the image forming device is incident on the transfer optical device in a substantially parallel light state, and is emitted from the transfer optical device to the eyepiece optical device, but the eyepiece optical device is arranged such that the pupil of the observer is positioned at the focal point of the eyepiece optical device.

In addition, the eyepiece optical device may have wavelength dependency in light condensing characteristics with respect to the position detection light. In other words, for example, in a case where the position detection light is made up of infrared rays, it is preferable that the infrared rays not be affected by the light condensing characteristics of the eyepiece optical device, or be hardly affected by the light condensing characteristics of the eyepiece optical device. In other words, for example, in a case where the eyepiece optical device includes the hologram element, it is preferable that the infrared rays constituting the position detection light not be condensed by the hologram element or be slightly condensed even when the infrared rays are condensed. The hologram element can have a known configuration and structure.

Furthermore, in the display devices (hereinafter, these may be collectively referred to as "display device or the like of the present disclosure") of the present disclosure including the various preferable aspects described above, by the transfer optical device/control device, the transfer optical device may perform image projection control on the retina of the observer in the horizontal direction ($\zeta$ direction) and the vertical direction ($\eta$ direction) of the image formed on the retina of the observer. In other words, the transfer optical device may perform control to move light (image forming light) directed to the eyepiece optical device in the X direction or the Y direction.

In the display device and the like of the present disclosure, the second position detection device may include: a light source; a first optical path synthesizing unit; a second optical path synthesizing unit; and a light receiving unit, an image (image forming light) emitted from the image forming device may be formed on a retina of an observer via the second optical path synthesizing unit, a transfer optical device, and an eyepiece optical device, and light (position detection light) emitted from the light source may reach the eyepiece optical device via the first optical path synthesizing unit, the second optical path synthesizing unit, and the transfer optical device, be returned to the transfer optical device by the eyepiece optical device, be incident on the first optical path synthesizing unit via the transfer optical device and the second optical path synthesizing unit, be emitted from the first optical path synthesizing unit in a direction different from the light source, and be incident on the light receiving unit.

The light source may be configured to emit infrared rays in an eye-safe wavelength range (for example, a wavelength of approximately 1.55 $\mu$m). In a case where the incident position of the light (position detection light) incident on the light receiving unit from the first optical path synthesizing unit on the light receiving unit deviates from a predetermined position (reference position), the transfer optical device/control device may control the position of the transfer optical device to eliminate the deviation. Incidentally, the larger the light amount of the position detection light returning to the light receiving unit, the higher the position detection resolution can be. On the other hand, since light close to parallel light is emitted toward the vicinity of the eye of the observer in order to detect the position of the eyepiece optical device, it is necessary to determine the upper limit of the light amount of the position detection light in consideration of safety. The exposure limit for the pupil or the retina depends on the wavelength of the position detection light, and the allowable light amount is the largest in the eye-safe wavelength range. This is because the light in the eye-safe wavelength range has attenuating properties in the presence of water molecules and does not reach the retina. For the above reason, by setting the wavelength range of the position detection light to the eye-safe wavelength range, high safety and high position detection resolution can be achieved. For the similar reason, there is also an advantage that the second position detection device is hardly affected by external light because the intensity of sunlight in the vicinity of the ground surface is also in a weak wavelength range.

Further, the light (position detection light) emitted from the light source constituting the second position detection device and incident on the first optical path synthesizing unit may be divergent light.

The light receiving unit may be arranged at a position (in-focus side) closer to the first optical path synthesizing unit than a position optically conjugate with the light source. In other words, the optical distance (a sum of a product of a spatial distance of the medium in the optical path of the position detection center light and a refractive index of the medium, a focal length of the lens is also considered in a case where the lens is arranged between the light receiving unit and the first optical path synthesizing unit) from the light receiving unit to the first optical path synthesizing unit is shorter than the optical distance (a sum of a product of a spatial distance of the medium in the optical path of the position detection center light and a refractive index of the medium, a focal length of the lens is also considered in a case where the lens is arranged between the light source and the first optical path synthesizing unit) from the light source to the first optical path synthesizing unit. In addition, the foreign substance resistance can be improved by arranging the light receiving unit at a position (in-focus side) closer to the first optical path synthesizing unit than the beam waist position (position where the spot diameter is minimized) of the position detection light.

The light receiving unit is divided into an undivided type and a divided type according to an operation principle. The former is a position detection element that detects the position of the position detection light by applying a change in the surface resistance value of the photodiode. The former detects the position of the position detection light using the principle that the surface resistance value changes according to the light amount. The latter detects the position of the position detection light by comparing voltages of photodiodes divided into a plurality of (for example, 4) areas. Instead of area division, a plurality of photodiodes can also be included. Since both are analog outputs, the position detection resolution is theoretically infinitesimal. As described above, the light receiving unit (the device or element that detects the position of the eyepiece optical device) may include a position detection element (position sensitive detector, PSD), a multi-split photodiode, or a plurality of photodiodes.

Position display means (position detection means), specifically, a retroreflective element, may be attached to the eyepiece optical device. Specific examples of the retroreflective elements include a retroreflective marker including a retroreflective sheet, and a corner cube prism. The corner cube prism is a device in which three planar plates having properties of reflecting light are combined at right angles to each other to form a cube vertex shape. Since the number of prisms is one, there is no in-plane variation, and since the reflectance is easily increased, there are advantages that the light amount of return light can be increased and the resolution can be increased. In addition, when a corner cube array in which a plurality of small corner cube prisms is arranged is used, the thickness of the retroreflective elements can be reduced, and the degree of freedom of attachment to the eyepiece optical device increases.

Although not limited, the eyepiece optical device is attached to the support member, pasted to the support member, or provided in the support member integrally with the support member. In a case where the support member includes a transparent plastic material, examples of the plastic material include cellulose esters such as polyethylene terephthalate, polyethylene naphthalate, polycarbonate, and cellulose acetate; fluoropolymers such as polyvinylidene fluoride or a copolymer of polytetrafluoroethylene and hexafluoropropylene; polyethers such as polyoxymethylene; polyolefins such as polyacetal, polystyrene, polyethylene, polypropylene, and a methylpentene polymer; polyimides such as polyamideimide and polyetherimide; polyamides; polyethersulfone; polyphenylene sulfide; polyvinylidene fluoride; tetraacetyl cellulose; brominated phenoxy; polyarylate; polysulfone; and the like. In a case where the support member includes glass, examples of the glass include transparent glass such as soda lime glass and white plate glass.

In the display device and the like of the present disclosure, a control unit included in the image display device may control the formation of the image in the image forming device on the basis of the position information of the observer or the position information of the eyepiece optical device, which is detected by the first position detection device, the second position detection device, or the first and second position detection devices. In addition, the control unit included in the image display device may control the movement of the image display device by the placement unit.

In the display device or the like of the present disclosure, the size of the retroreflective element and the distance to the retroreflective element can be measured using the camera constituting the first position detection device. The camera constituting the first position detection device can also be used for rough adjustment for specifying the position of the eyepiece optical device at the start of use of the display device. In other words, at the start of use of the display device, the position of the eyepiece optical device may be searched by the camera constituting the first position detection device, and the position of the placement unit may be adjusted. Furthermore, when the light receiving unit starts receiving the position detection light thereafter, the transfer optical device may be finely adjusted by the second position detection device. Otherwise, at the start of use of the display device, the position of the eyepiece optical device may be searched on the basis of scanning of the transfer optical device, and when the light receiving unit starts receiving the position detection light, the position of the placement unit may be adjusted, and further, the transfer optical device may be finely adjusted by the second position detection device.

In some cases, the second position detection device may also serve as the first position detection device. In other words, the light source constituting the second position detection device is intensity-modulated at a high frequency, the position detection light colliding with and reflected by the eyepiece optical device is received by the light receiving unit, and the distance to the target (eyepiece optical device) is obtained from the phase delay time or the like of the pulse wave. Specifically, the position detection light is modulated in the order of megahertz to gigahertz, and the signal output from the light receiving unit is divided into a high frequency component corresponding to the modulation band (band for detecting the distance to the eyepiece optical device) and a low frequency component of kilohertz or less (band for detecting the position of the eyepiece optical device) and subjected to signal processing, and accordingly, the position of the eyepiece optical device can be obtained without increasing the number of components and the number of retroreflective elements.

In the display device or the like of the present disclosure, the transfer optical device/control device controls the transfer optical device such that the image emitted from the image forming device reaches the eyepiece optical device under the control of the control unit on the basis of the position information of the eyepiece optical device detected by the second position detection device. However, the transfer optical device/control device may control the transfer optical device such that all of the images emitted from the image forming device reach the eyepiece optical device, or may control the transfer optical device such that some of the images emitted from the image forming device reach the eyepiece optical device. The display device or the like of the present disclosure is a retina projection type (retinal direct drawing type) display device based on Maxwellian view.

The light (position detection light) emitted from the light source is reflected by the first optical path synthesizing unit and incident on the second optical path synthesizing unit. Then, in this case, the light (return light) from the second optical path synthesizing unit passes through the first optical path synthesizing unit and is incident on the light receiving unit. Otherwise, the light (position detection light) emitted from the light source passes through the first optical path synthesizing unit and is incident on the second optical path synthesizing unit. Then, in this case, the light (return light) from the second optical path synthesizing unit is reflected by the first optical path synthesizing unit and is incident on the light receiving unit. Examples of the first optical path synthesizing unit having such a function include a polarization beam splitter. The polarization beam splitter allows P-polarized light to pass therethrough and reflects S-polarized light. Alternatively, examples of the first optical path synthesizing unit having such a function include a half mirror.

Specifically, the image emitted from the image forming device passes through the second optical path synthesizing unit and is incident on the transfer optical device. On the other hand, the light (position detection light) from the light source is reflected by the second optical path synthesizing unit, reaches the eyepiece optical device via the transfer optical device, is returned to the transfer optical device by the eyepiece optical device, is incident on the second optical path synthesizing unit, is reflected by the second optical path synthesizing unit, and is incident on the first optical path synthesizing unit. Alternatively, an image emitted from the image forming device is reflected by the second optical path synthesizing unit, and the light (position detection light) from the light source passes through the second optical path synthesizing unit, reaches the eyepiece optical device via the transfer optical device, is returned to the transfer optical device by the eyepiece optical device, is incident on the second optical path synthesizing unit, passes through the second optical path synthesizing unit, and is incident on the first optical path synthesizing unit. Examples of the second optical path synthesizing unit having such a function include a half mirror, a dichroic mirror that reflects light having a specific wavelength and allows light having other wavelengths to pass therethrough, and a cold mirror that reflects only visible light and allows infrared light to pass therethrough.

Furthermore, as described above, the light source may emit infrared rays, but is not limited thereto, and may receive visible light having a predetermined wavelength. Note that, in the former case (aspect of emitting infrared rays), the light source can include, for example, a light emitting diode that emits infrared rays, a semiconductor laser element that emits infrared rays, or a combination of a semiconductor laser element that emits infrared rays and a light diffusion plate. Furthermore, the light receiving unit may include an imaging device (infrared camera) or a sensor (infrared sensor) capable of detecting infrared rays, in addition to the non-split type or split type light receiving unit described above. By mounting a filter (infrared transmitting filter) that allows only a wavelength of an infrared ray used for detection to pass therethrough in front of the imaging device, image processing in a subsequent stage can be simplified. On the other hand, in the latter case (aspect of receiving visible light having a predetermined wavelength), the light receiving unit can include an imaging device (camera) or a sensor (image sensor) capable of detecting visible light. Furthermore, in the latter case (aspect of receiving visible light having a predetermined wavelength), the eyepiece optical device may have wavelength dependency in light condensing characteristics, the eyepiece optical device may include a lens member, or can include a hologram element, and further, in some cases, the imaging device (camera) or the sensor constituting the light receiving unit can specify the position of the eyepiece optical device by performing image processing on the obtained image of the eyepiece optical device. In this case, the retroreflective elements are unnecessary, but for example, by attaching the color marker to the eyepiece optical device, the image processing can be simplified.

In a case where the position detection light emitted from the light source is incident on the first optical path synthesizing unit via a coupling lens arranged adjacent to the light source in order to make the light incident on the first optical path synthesizing unit parallel light, it is necessary to make all optical elements (including not only the first optical path synthesizing unit, the second optical path synthesizing unit, and the transfer optical device, but also a coupling lens), through which the position detection light passes, larger than the spot size of the position detection light in the eyepiece optical device. Specifically, it is necessary to design the size of the coupling lens in consideration of the size of the retroreflective elements, the margin at the time of various operations, and the deviation of the traveling axis that may occur within the expected moving range of the observer, and it may be difficult to downsize the entire display device. By arranging the light source inside the focal position of the coupling lens, as described above, the light (position detection light) emitted from the light source becomes divergent light, and downsizing of the entire display device can be realized. Furthermore, in the optical design, it is desirable to reduce the optical path length (distance from the light source to the transfer optical device) in the main body to be as short as possible from the viewpoint of downsizing.

The display device or the like of the present disclosure may include a known eye tracking device (eye tracking camera). In the eye tracking device, for example, a reflection point of light (for example, near infrared rays) is generated on the cornea, the reflection point is imaged by the eye tracking device, the reflection point of the light on the cornea and the pupil are identified from the captured image of the eyeball, and the direction of the eyeball is calculated on the basis of the reflection points of the light and other geometric features. Furthermore, a pupil diameter measuring unit that measures a pupil diameter of the observer may be provided. Examples of the pupil diameter measuring unit include a known eye tracking device (eye tracking camera). Specifically, the distance from the eye tracking device to the pupil is calculated on the basis of the image of the eye recorded by the eye tracking device, and the pupil diameter can be obtained from the diameter of the pupil in the captured image. By obtaining the pupil diameter, the luminance of the image can be controlled and the incidence of the image on the pupil can be optimized.

In the display device and the like of the present disclosure including the various preferable aspects and configurations described above, the eyepiece optical device can be a semi-transmissive (see-through) type, and accordingly, the outside view can be seen through the eyepiece optical device. Then, in this case, the eyepiece optical device may be configured of a hologram element or may include a hologram element. In some cases, the eyepiece optical device may also be a non-transmissive type (aspect in which the outside view cannot be viewed through the eyepiece optical device).

In the display device and the like of the present disclosure including the various preferable aspects and configurations described above, the image display device may be arranged in front of the observer. Note that, as long as the image display device is arranged in front of the observer, depending on the specifications of the transfer optical device and the eyepiece optical device, the image display device may be positioned at a position higher than the head of the observer, may be positioned at the same level as the head of the observer, may be positioned at a position lower than the head of the observer, may be positioned facing the observer, or may be positioned obliquely with respect to the observer. In a case where the display device is a non-transmissive type, the image display device can be arranged in front of the observer.

In the display device and the like of the present disclosure including the various preferable aspects and configurations described above, the image forming device may have a plurality of pixels arranged in a two-dimensional matrix. Such a configuration of the image forming device is referred to as "image forming device having a first configuration" for convenience.

Examples of the image forming device having the first configuration include: an image forming device including a reflection type spatial light modulation device and a light source; an image forming device including a transmission type spatial light modulation device and a light source; and an image forming device including a light emitting element such as an organic electro luminescence (EL), an inorganic EL, a light emitting diode (LED), or a semiconductor laser element, and among these, an image forming device including an organic EL light emitting element (organic EL display device), and an image forming device including a reflection type spatial light modulation device and a light source are preferable. Examples of the spatial light modulation device include a light valve, a transmission type or reflection liquid crystal display device such as liquid crystal on silicon (LCOS), and a digital micromirror device (DMD), and examples of the light source include a light emitting element. Furthermore, the reflection type spatial light modulation device may include a liquid crystal display device and a polarization beam splitter that reflects and guides a part of light from a light source to the liquid crystal display device, allows a part of light reflected by the liquid crystal display device to pass therethrough and guides the light to the transfer optical device. Examples of the light emitting element constituting the light source include a red light emitting element, a green light emitting element, a blue light emitting element, and a white light emitting element. Alternatively, the white light may be obtained by mixing the red light, the green light, and the blue light emitted from the red light emitting element, the green light emitting element, and the blue light emitting element using a light pipe and uniformizing luminance. Examples of the light emitting element include a semiconductor laser element, a solid-state laser, and an LED. The number of pixels is only required to be determined on the basis of specifications required for the image forming device, and 320 × 240, 432 × 240, 640 × 480, 1024 × 768, 1920 × 1080, or the like can be exemplified as a specific value of the number of pixels. In the image forming device having the first configuration, a diaphragm may be arranged at a position of a front focal point (focal point on the image forming device side) of a lens system (as described later).

Alternatively, the image forming device in the display device and the like of the present disclosure including the various preferable aspects and configurations described above may include: a light source; and scanning means that scans light emitted from the light source to form an image. Such an image forming device is referred to as "image forming device having a second configuration" for convenience.

Examples of the light source in the image forming device having the second configuration include a light emitting element, and specifically include a red light emitting element, a green light emitting element, a blue light emitting element, and a white light emitting element. Alternatively, white light may be obtained by mixing red light, green light, and blue light emitted from the red light emitting element, the green light emitting element, and the blue light emitting element by using a light pipe to make the brightness uniform. Examples of the light emitting element include a semiconductor laser element, a solid-state laser, and an LED. The number of pixels (virtual pixels) in the image forming device having the second configuration is also only require to be determined on the basis of specifications required for the image forming device, and 320 × 240, 432 × 240, 640 × 480, 1024 × 768, 1920 × 1080, or the like can be exemplified as a specific value of the number of pixels (virtual pixels). Furthermore, in a case where color image display is performed, and in a case where the light source includes a red light emitting element, a green light emitting element, and a blue light emitting element, it is preferable to perform color synthesis using, for example, a cross prism. Examples of the scanning means include a MEMS mirror or a galvano mirror having a micromirror rotatable in a two-dimensional direction, which horizontally and vertically scans light emitted from a light source. In the image forming device having the second configuration, a MEMS mirror or a galvano mirror may be arranged at a position of a front focal point (focal point on the image forming device side) of a lens system (as described later).

In the image forming device having the first configuration or the image forming device having the second configuration, light converted into a plurality of rays of parallel light by a lens system (an optical system that converts emitted light into parallel light) is made incident on a transfer optical device (specifically, for example, the movable mirror). In order to generate the parallel light, specifically, as described above, for example, the light emitting unit of the image forming device may be positioned at a location (position) of the focal length in the lens system. Examples of the lens system include an optical system having positive optical power as a whole, in which a convex lens, a concave lens, a free-form surface prism, and a hologram lens are used alone or in combination. Between the lens system and the transfer optical device, a light shielding unit having an opening portion may be arranged in the vicinity of the lens system such that undesirable light is emitted from the lens system and is not incident on the transfer optical device.

In the display device and the like of the present disclosure, the eyepiece optical device may be attached to a frame. The frame includes a front portion arranged in front of the observer, two temple portions rotatably attached to both ends of the front portion via hinges, and a nose pad. A tip portion is attached to a distal end portion of each temple portion. In addition, the front portion and the two temple portions may also be integrated with each other. The assembly of the frame (including the rim portion) and the nose pad has substantially the same structure as ordinary eyeglasses. The material constituting the frame including the nose pad can include the same material as the material constituting normal glasses, such as a metal, alloy, plastic, or combination thereof. Alternatively, the eyepiece optical device may be attached to goggles or a face mask, or may be formed integrally with the goggles or the face mask or may be attached to a surface member (face member, mask member) having a shape similar to a protective face shield that can be worn on the head of an observer or may be formed integrally with the surface member.

The eyepiece optical device to be worn by the observer has an extremely simple structure and does not require a battery or the like for driving since there is no driving unit, and it is possible to easily achieve the reduction in size and weight of the eyepiece optical device. Unlike the HMD of the related art, the image display device is not mounted on the head of the observer. The image display device is disposed in an external facility or the like, or is mounted as a wearable device on a wrist or the like of the observer. Examples in which the image display device is disposed in an external facility or the like:

(A) An example in which an image display device for passengers is attached to a back surface of a back (backrest) of a seat of a vehicle or an airplane
(B) An example in which an image display device for spectators is attached to a back surface of a back (backrest) of a seat of a theater or the like
(C) An example in which an image display device for drivers or the like is attached to a vehicle, an aircraft, an automobile, a motorcycle, a bicycle, or the like
(D) An example in which an image display device is attached to a drone (including an airship type) capable of maintaining a certain distance from the observer or an agent robot (including an arm type robot) that travels automatically
(E) An example used as an alternative to a monitor used in a personal computer, a mobile phone, a smartwatch, or the like
(F) An example of being mounted on a wristwatch or attached to the arm of the observer
(G) An example of use as an alternative to a display or a touch panel used in an automatic teller machine in a financial institution
(H) An example of use as an alternative to a display or a touch panel used in a store or an office
(I) An example in which a screen of a mobile phone or a personal computer is enlarged or expanded and displayed
(J) An example of use as an alternative to a display plate or the like used in a museum, an amusement park, or the like
(K) An example in which an image display device for customers is attached to a table of a coffee shop, a cafe, or the like
(L) An example of being incorporated in a full-face helmet, a protective face mask, or the like

In the display device and the like of the present disclosure including the various preferable aspects and configurations described above, a signal for displaying an image in the image forming device (a signal for forming a virtual image in the eyepiece optical device) may be received from the outside (outside the system of the display device). In such a form, information and data regarding an image displayed in the image forming device are recorded, stored, and saved in, for example, a so-called cloud computer or a server, and various types of information and data can be transferred and exchanged between the cloud computer or the server and the image display device by providing the image display device with communication means such as a telephone line, an optical line, a mobile phone, or a smartphone, or by combining the image display device and the communication means, and signals based on various types of information and data, that is, signals for displaying an image in the image forming device, can be received. Alternatively, a signal for displaying an image in the image forming device may be stored in the image display device. The image displayed on the image forming device includes various types of information and various types of data. As the wearable device, the image display device may include a camera (imaging device), and an image captured by the camera may be sent to a cloud computer or a server via the communication means, various types of information and data corresponding to the image captured by the camera may be searched for in the cloud computer or the server, the various types of information and data may be sent to the image display device via the communication means, and the various types of information and data may be displayed in the image forming device as an image.

The display device and the like of the present disclosure including the above-described various preferable aspects and configurations can be used in, for example, display of various types of information and the like at various sites on the Internet, display of various descriptions and symbols, signs, stamps, marks, designs, and the like at the time of driving, operation, maintenance, disassembly, and the like of an observation target such as various devices,; display of various descriptions and symbols, signs, stamps, marks, designs, and the like regarding an observation target such as a person or an article,; display of images or still images; display of subtitle of movie or the like; display of descriptive texts and closed captions regarding a video synchronized with a video; and display of various descriptions regarding observation targets and explanatory text or the like for describing the content, progress, background, and the like in plays, Kabuki, Noh, Kyogen, opera, concerts, ballet, various plays, amusement parks, museums, tourist spots, tourist destinations, tourist information center, and the like, and can be used to display closed captions. In plays, Kabuki, Noh, Kyogen, opera, concerts, ballet, various plays, amusement parks, museums, tourist spots, tourist destinations, tourist information centers, and the like, text related to the observation target are only required to be displayed as an image in the image forming device at an appropriate timing. Specifically, for example, according to a progress status of a movie or the like, or according to a progress status of a play or the like, on the basis of a predetermined schedule and time allocation, an image control signal is sent to the image forming device through an operation of an operator or under control of a computer or the like, and an image is displayed on the image forming device. In addition, various descriptions regarding the observation target such as various devices, persons, and articles are displayed. However, by imaging (image-capturing) the observation target such as various devices, persons, and articles with a camera and analyzing the imaging (image-capturing) content in the image forming device, various descriptions regarding the observation target such as various devices, persons, and articles created in advance can be displayed in the image forming device.

As described above, the display device of the present disclosure is a light source separation type retinal direct drawing type eyewear, and enables an observer to observe an image, but it is important how light (image) is stable guided to the pupil. In the light source separation type retinal direct drawing type eyewear, the image display device and the observer exist as separate bodies. Therefore, a mechanism for guiding the image from the image display device to the pupil of the observer while keeping the positional relationship constant between the image display device and the observer is important. In a case where the positional relationship between the image display device and the observer is not kept constant, the path for guiding the image from the image display device to the pupil of the observer is narrowed, and thus the state where the image can be observed, such as the posture of the observer, is greatly limited. Thus, this cannot withstand long-time observation of the image. In the display device of the present disclosure, stable image observation is realized by combining two mechanisms of the placement unit having a role of keeping the positional relationship constant between the observer and the image display device separated from the observer, and the transfer optical device that guides an image from the image forming device to the pupil of the observer.

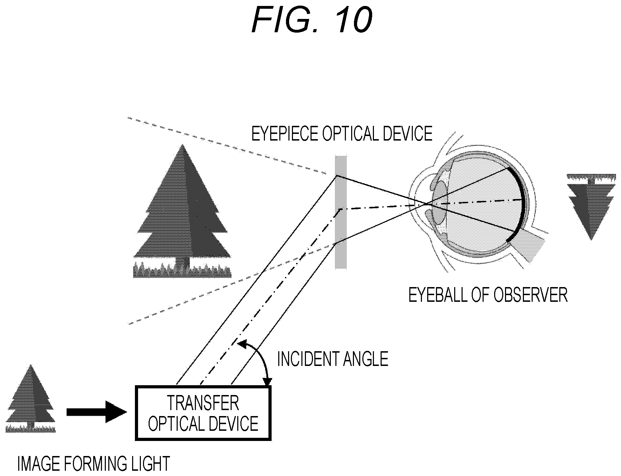

In order to realize observation of an image by retinal direct drawing, the eyepiece optical device includes, for example, a hologram lens. As illustrated in Fig. 10, in consideration of a normal angle of view and the like, the hologram lens is arranged at a position equivalent to that of the lens of normal glasses in the vicinity of 10 mm to 30 mm in front of the eye.

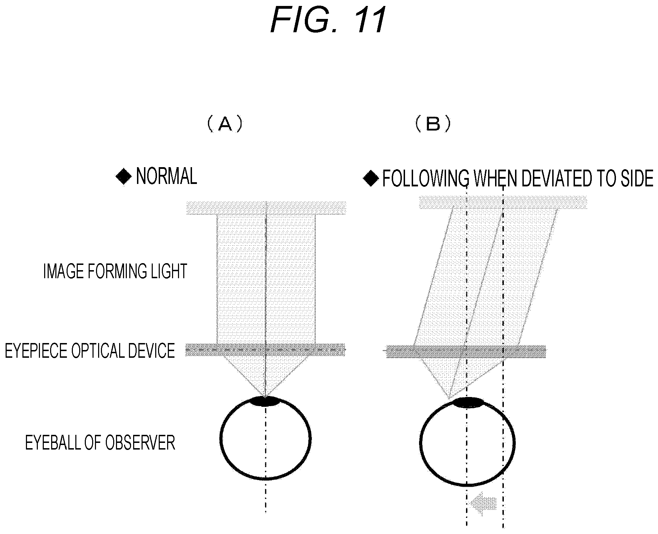

In order for an image to be stably observed, it is important to keep the positional relationship between the eyepiece optical device and the pupil, and when the light condensing point of the eyepiece optical device deviates from the pupil, the image cannot be visually recognized. When the image is guided to the eyepiece optical device, as illustrated in (A) of Fig. 11, there is no problem in a case where the image enters straight into the pupil of the observer, but in a case where the image enters obliquely into the pupil of the observer, as illustrated in (B) of Fig. 11, a phenomenon in which the image forming point of the image deviates from the pupil occurs. The generated deviation is geometrically obtained, and when the deviation amount is L (unit: mm), the focal length of the hologram lens is f (unit: mm), and the incidence angle of the deviated image is $\theta$ (degree), $L = f \times \tan(\theta)$ is satisfied. It is assumed that, when the pupil has a minimum diameter of 2 mm, that is, when L = 1 mm, the image is guided to the pupil. It is assumed that, in a case where the distance from the image forming device to the hologram lens is 400 mm and the focal length f of the hologram lens is 15 mm, the angle of the light beam at which the image can be visually recognized is $\theta$ = 3.8 degrees from $1 = 15 \times \tan(\theta)$. Therefore, when converted into a range in which the observer can move in, for example, the $\zeta$ direction with respect to the image display device, $400 \times \tan(3.8) = 26.5$ mm is satisfied. In other words, the observer can move only approximately $\pm 27$ mm in the $\zeta$ direction with respect to the image display device. This may not cause a problem in observation of the image for several minutes, but it would make it difficult to observe the image for a long time.

In order to avoid such a problem, a method of guiding the image to the pupil by moving the position of the hologram lens with respect to the pupil in a state where the image is appropriately guided with respect to the hologram lens is considered. However, in such a method, it is necessary to dispose a mechanism for recognizing the pupil and a mechanism for moving the hologram lens in the glasses unit, and weight reduction cannot be achieved. In the display device of the present disclosure, the fine adjustment mechanism (specifically, the transfer optical device) that controls the image and the coarse adjustment mechanism (specifically, the placement unit) that moves the image display device are combined to prevent the image from not entering the pupil of the observer at the time of following the observer, and the range of the observation position of the observer with respect to the image display device can be enlarged. Here, the transfer optical device is controlled on the basis of high drive resolution and quick responsiveness, and the placement unit is controlled on the basis of a large drive stroke and a relatively low moving speed as compared with the transfer optical device. Examples of the movement amount of the image display device by the placement unit include $\pm 160$ mm in the X direction, $\pm 160$ mm in the Y direction, and $\pm 100$ mm in the Z direction. In addition, a maximum of 35 degrees can be exemplified as the incidence angle of the image forming center light to the eyepiece optical device.

Moreover, the image forming device, the transfer optical device, the first position detection device, and the second position detection device are arranged on the image display device side in order to reduce the burden on the observer of wearing the eyepiece optical device. In other words, in the display device of the present disclosure, the image display device and the eyepiece optical device are arranged to be spatially separated from each other, and the image display device and the transfer optical device are controlled. Therefore, the display device does not have a structure in which a burden is imposed on the observer such as an increase in mass and size of the eyepiece optical device, and it is possible to reliably cause the image to reach the pupil of the observer without imposing a burden on the observer.

[Example 1]

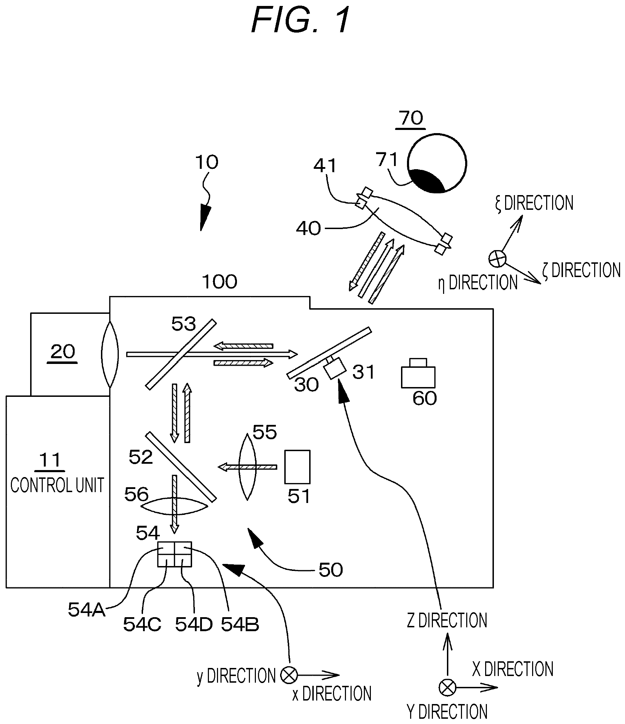

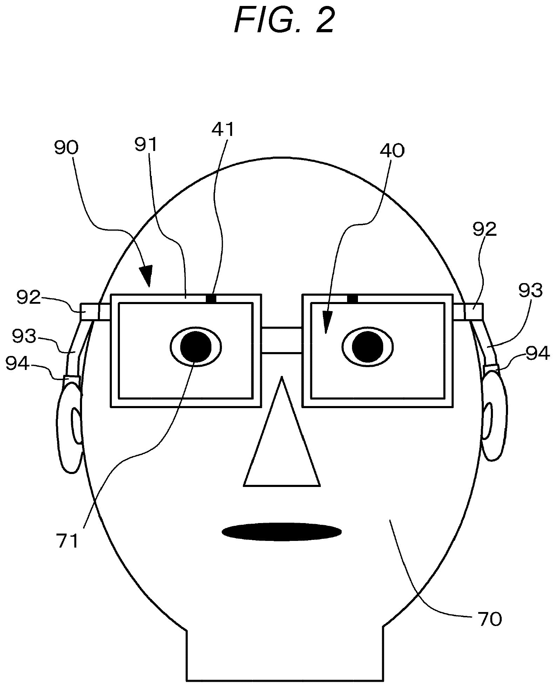

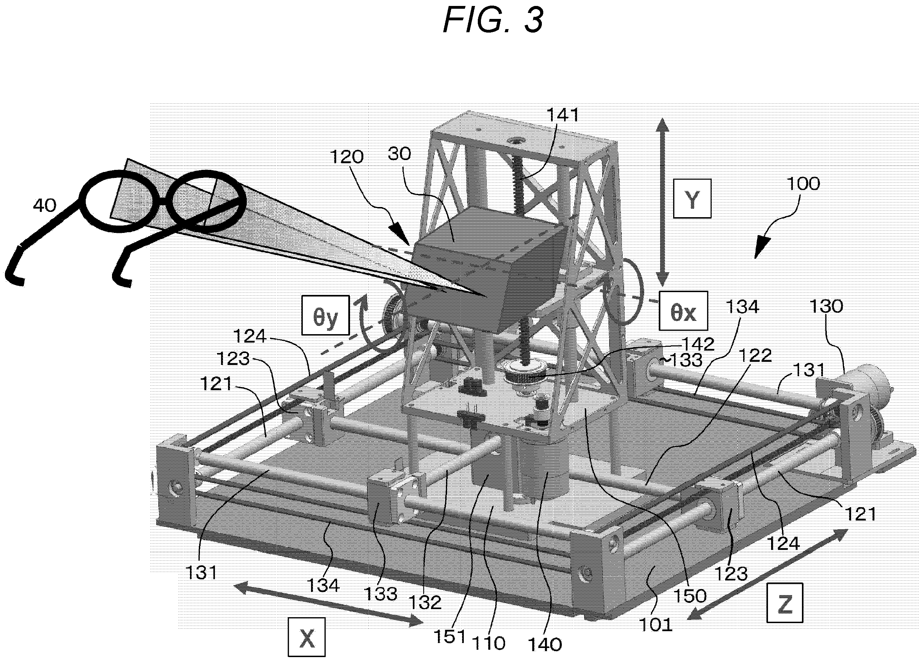

Example 1 relates to a display device of the present disclosure. Fig. 1 illustrates a conceptual diagram of a display device of Example 1, Fig. 2 illustrates a schematic view of an observer wearing an eyepiece optical device constituting the display device of Example 1 when viewed from the front, and Fig. 3 illustrates a perspective view of the placement unit and the like.

According to Example 1 or Examples 2 to 4 described later, there is provided a display device including:

an eyepiece optical device 40;
an image display device 10 including an image forming device 20 and a transfer optical device 30 that emits an image incident from the image forming device 20 to the eyepiece optical device 40; and
a placement unit 100 on which the image display device 10 is placed, in which
the eyepiece optical device 40 and the image display device 10 are arranged to be spatially separated from each other, the eyepiece optical device 40 forms an image from the transfer optical device 30 on a retina of an observer 70, and when a horizontal direction of the image formed on the retina of the observer 70 is defined as a $\zeta$ direction, a vertical direction of the image is defined as an $\eta$ direction, a depth direction of the image is defined as a $\xi$ direction, a moving direction of the placement unit 100 corresponding to the $\zeta$ direction is defined as an X direction, a moving direction of the placement unit 100 corresponding to the $\eta$ direction is defined as a Y direction, and a moving direction of the placement unit 100 corresponding to the $\xi$ direction is defined as a Z direction, the placement unit 100 is capable of moving the image display device 10 in at least one of the X direction, the Y direction, and the Z direction.

As described above, the eyepiece optical device 40 and the image display device 10 are arranged spatially separately, but specifically, the eyepiece optical device 40 and the image display device 10 are arranged to be separated from each other, and are not integrally connected. Furthermore, the eyepiece optical device 40 and the image display device 10 are relatively movable. In other words, the image display device 10 may be arranged at a position away from the observer 70, or may be arranged at a site of the observer 70 away from the head of the observer 70. The display devices in Example 1 or Examples 2 to 4 described later is a retina projection type (retinal direct drawing type) display device based on Maxwellian view. The image display device 10 is placed on the placement unit 100, but the entire image display device 10 may be placed, or a part of the image display device 10 may be placed in some cases.

Then, in the display device of Example 1, the placement unit 100 can move the image display device 10 at least in the X direction and the Z direction. In addition, the display device includes a first position detection device 60 that detects a position of the eyepiece optical device 40, and the placement unit 100 moves the image display device 10 on the basis of the position information of the observer 70 or the position information of the eyepiece optical device 40, which is obtained by the first position detection device 60. The transfer optical device 30 includes a movable mirror. Here, the first position detection device 60 includes a camera (imaging device) or a time of flight (TOF) sensor (that is, a TOF type distance measurement device or an indirect TOF type distance measurement device).

In the TOF type distance measurement device, the eyepiece optical device 40 is irradiated with pulsed light, and a time delay when this light reciprocates with the eyepiece optical device 40 is detected. In addition, in the indirect TOF type distance measurement device, the eyepiece optical device 40 is irradiated with pulsed light, and a time delay when this light reciprocates with the eyepiece optical device 40 is detected as a phase difference.

In the indirect TOF method, it is not always necessary to directly convert a change in light receiving intensity into an electric signal, and it is possible to perform synchronous detection on the sensor (detect a phase shift amount as a charge amount). More specifically, under the control of the control circuit provided in the distance measurement device, the distance measurement device images the eyepiece optical device 40 on the basis of the light emitted from the light source of the distance measurement device in a first period $TP_1$ and the second period $TP_2$, accumulates the first image signal charge obtained in the light receiving device of the distance measurement device in a first charge accumulation unit in the first period $TP_1$, and accumulates the second image signal charge obtained in the light receiving device of the distance measurement device in a second charge accumulation unit in the second period $TP_2$. Then, the control circuit obtains the distance from the distance measurement device to the eyepiece optical device 40 on the basis of the first image signal charge accumulated in the first charge accumulation unit and the second image signal charge accumulated in the second charge accumulation unit. Here, when the first image signal charge is $Q_1$, the second image signal charge is $Q_2$, c is the speed of light, and Tp is the time (pulse width) of the first period $TP_1$ and the second period $TP_2$, the distance D from the distance measurement device to the eyepiece optical device 40 can be obtained on the basis of $D = (c \cdot T_P / 2) \times Q_2 / (Q_1 + Q_2)$.

The first position detection device 60 can also include a camera. Then, the size of position display means 41, the distance to the position display means 41, and the distance between a plurality of position display means 41 in a case where the plurality of position display means 41 is disposed, are measured. The camera constituting the first position detection device 60 can also be used for rough adjustment for specifying the position of the observer 70 or the position of the eyepiece optical device 40 at the start of use of the display device. In other words, at the start of use of the display device, the position of the observer 70 or the position of the eyepiece optical device 40 is searched by the camera, the position of the placement unit 100 is adjusted, and further, the transfer optical device 30 is roughly adjusted. When a light receiving unit 54 (as described later) starts receiving the position detection light, the transfer optical device 30 is only required to be finely adjusted by the second position detection device 50 (as described later).

In addition, in the display device of Example 1, the image display device 10 further includes a transfer optical device/control device 31, and the transfer optical device/control device 31 controls the transfer optical device 30 such that the image emitted from the image forming device 20 reaches the eyepiece optical device 40. The image display device 10 further includes a second position detection device 50 that detects the position of the eyepiece optical device 40, and the transfer optical device/control device 31 controls the transfer optical device 30 such that the image emitted from the image forming device 20 reaches the eyepiece optical device 40 under the control of the control unit 11 provided in the image display device 10 on the basis of the position information of the eyepiece optical device 40 detected by the second position detection device 50. In other words, by the transfer optical device/control device 31, the transfer optical device 30 performs image projection control on the retina of the observer 70 in the horizontal direction ($\zeta$ direction) and the vertical direction ($\eta$ direction) of the image formed on the retina of the observer 70. In other words, the transfer optical device 30 may perform control to move light (image forming light) directed to the eyepiece optical device 40 in the X direction or the Y direction. In addition, the control unit 11 controls the formation of the image in the image forming device 20 on the basis of the position information of the observer 70 or the position information of the eyepiece optical device 40, which is detected by the first position detection device 60, the second position detection device 50, or the first position detection device 60 and the second position detection device 50.

The eyepiece optical device 40 is movable with respect to the placement unit 100, the eyepiece optical device 40 is worn by the observer 70, and the eyepiece optical device 40 includes a hologram lens. The hologram lens is attached to a support member (not illustrated). Alternatively, the hologram lens is provided in the support member integrally with the support member.

As illustrated in the perspective view of Fig. 3, in the display device of Example 1, the placement unit 100 includes a placement table 110 on which the image display device 10 is placed. In addition, the placement unit 100 includes an X-direction moving mechanism that moves the placement table 110 in the X direction, a Z-direction moving mechanism that moves the placement table 110 in the Z direction, and a Y-direction moving mechanism that moves the image display device 10 placed on the placement table 110 in the Y direction. The placement table 110 is freely movable on the placement base 101 arranged on the placement unit 100. Operations of the X-direction moving mechanism, the Z-direction moving mechanism, and the Y-direction moving mechanism are controlled by the control unit 11.

The image display device 10 and the Y-direction moving mechanism are mounted on a support base 150, and the support base 150 is attached to the placement table 110. A receiving member 151 is attached to a lower surface of the support base 150, second guide units 122 and 132 to be described later penetrates the receiving member 151, the support base 150 moves in the X direction and the Z direction with the movement of the second guide units 122 and 132 in the X direction and the Z direction, and as a result, the image display device 10 moves in the X direction and the Z direction. A structure in which masses of the image display device 10 and the Y-direction moving mechanism are received by the placement table 110 and further by the placement base 101, which is a structure in which the masses of the image display device 10 and the Y-direction moving mechanism are not directly applied to the X-direction moving mechanism and the Z-direction moving mechanism, is employed. In addition, with such a structure, it is possible to drive with low vibration.

The Z-direction moving mechanism includes a motor 120 (hidden and not visible in Fig. 3) attached to the placement base 101, two first Z guide units 121 attached to the placement base 101, and a second Z guide unit 122 that freely slides along the first Z guide unit 121. The first Z guide unit 121 and the second Z guide unit 122 constitute a shaft sliding mechanism. Sliding units 123 screwed with the first Z guide unit 121 are disposed at both ends of the second Z guide unit 122. Belt pulleys are disposed at both ends of the two first X guide units 131, a belt 124 is disposed in the belt pulley, and the sliding unit 123 is attached to the belt 124. One first X guide unit 131 is rotated by the rotation of the motor 120, and the belt 124 is moved via the belt pulley by the rotation of one first X guide unit 131. Further, as a result, the sliding unit 123 attached to the belt 124 moves, and the second Z guide unit 122 freely slides with respect to the first Z guide unit 121 and moves in the Z direction. Note that an adjustment mechanism (not illustrated) that adjusts the tension of the belt 124 is provided in the belt pulley.

The X-direction moving mechanism includes a motor 130 attached to the placement base 101, two first X guide units 131 attached to the placement base 101, and a second X guide unit 132 that freely slides along the first X guide unit 131. The first X guide unit 131 and the second X guide unit 132 constitute a shaft sliding mechanism. Sliding units 133 screwed with the first X guide unit 131 are disposed at both ends of the second X guide unit 132. Belt pulleys are disposed at both ends of the two first Z guide units 121, a belt 134 is disposed in the belt pulley, and the sliding unit 133 is attached to the belt 134. One first Z guide unit 121 is rotated by the rotation of the motor 130, and the belt 134 is moved via the belt pulley by the rotation of one first Z guide unit 121. As a result, the sliding unit 133 attached to the belt 134 moves, and the second X guide unit 132 freely slides with respect to the first X guide unit 131 and moves in the X direction. Note that an adjustment mechanism (not illustrated) that adjusts the tension of the belt 134 is provided in the belt pulley.

The Y-direction moving mechanism includes a motor 140 disposed on the placement table 110, a guide unit (including a lead screw) 141 which is disposed on the placement table 110 (more specifically, the support base 150) and to which the image display device 10 is attached, and a transmission mechanism 142 that connects the motor 140 and the guide unit 141 to each other. In the Y-direction moving mechanism, the rotation of the motor 140 is transmitted to the guide unit 141 via the belt (not illustrated) and the transmission mechanism 142, and the image display device 10 attached to the guide unit 141 freely slides (moves) up and down in the Y direction by the rotation of the guide unit 141.

In addition, at least one type of rotation mechanism among an X-direction rotation mechanism that rotates the image display device 10 placed on the placement table 110 about an X axis extending in parallel to the X direction, a Z-direction rotation mechanism that rotates the image display device 10 placed on the placement table 110 about a Z axis extending in parallel to the Z direction, and a Y-direction rotation mechanism that rotates the image display device 10 placed on the placement table 110 about a Y-axis extending in parallel to the Y direction, may be provided.

The second position detection device 50 includes:

a light source 51;
a first optical path synthesizing unit 52;
a second optical path synthesizing unit 53; and
a light receiving unit 54. In addition,
an image (image forming light) emitted from the image forming device 20 is formed on the retina of the observer 70 via the second optical path synthesizing unit 53, the transfer optical device 30, and the eyepiece optical device 40, and light (position detection light) emitted from the light source 51 reaches the eyepiece optical device 40 via the first optical path synthesizing unit 52, the second optical path synthesizing unit 53, and the transfer optical device 30, is returned to the transfer optical device 30 by the eyepiece optical device 40, is incident on the first optical path synthesizing unit 52 via the transfer optical device 30 and the second optical path synthesizing unit 53, is emitted from the first optical path synthesizing unit 52 in a direction different from the light source 51, and is incident on the light receiving unit 54. In other words, the light (position detection light) emitted from the light source 51 is reflected by the first optical path synthesizing unit 52 and incident on the second optical path synthesizing unit 53. In addition, the light is reflected by the second optical path synthesizing unit 53, reaches the eyepiece optical device 40 via the transfer optical device 30, is returned to the transfer optical device 30 by the eyepiece optical device 40, is incident on the second optical path synthesizing unit 53, is reflected by the second optical path synthesizing unit 53, is incident on the first optical path synthesizing unit 52, passes through the first optical path synthesizing unit 52, and is incident on the light receiving unit 54.

In the display devices of Example 1 or Examples 2 to 4 described later, the light source 51 emits infrared rays in an eye-safe wavelength range (for example, a wavelength approximately 1.55 $\mu$m) that do not interfere with an image. Specifically, the light source 51 includes a semiconductor laser element that emits infrared rays. Furthermore, the light (position detection light) emitted from the light source 51 and incident on the first optical path synthesizing unit 52 is divergent light. A coupling lens 55 is arranged between the light source 51 and the first optical path synthesizing unit 52. The light source 51 is arranged on the inner side of the focal position of the coupling lens 55. As a result, the light emitted from the light source 51 becomes divergent light, and downsizing of the entire display device can be realized. In addition, the first optical path synthesizing unit 52 may include a beam splitter, and the second optical path synthesizing unit 53 may include a dichroic mirror. Infrared rays (position detection light) emitted from the light source 51 do not interfere with an image.

The light receiving unit 54 includes, but is not limited to, a plurality of photodiodes, and detects the position of the position detection light by comparing voltages of the plurality of photodiodes (specifically, four diodes 54A, 54B, 54C, and 54D). A lens member 56 is arranged between the light receiving unit 54 and the first optical path synthesizing unit 52. In addition, the light receiving unit 54 may be arranged at a position (in-focus side) closer to the first optical path synthesizing unit 52 than a position optically conjugate with the light source 51. In other words, the light receiving unit 54 is arranged on the first optical path synthesizing unit side with respect to the beam waist position (the position where the spot diameter is minimized) of the position detection light. Then, accordingly, the foreign substance resistance can be improved.

The transfer optical device 30 includes a movable mirror. The transfer optical device 30 is attached to the transfer optical device/control device 31 that controls the movement of the transfer optical device 30, and the transfer optical device/control device 31 is controlled by the control unit 11. The transfer optical device 30 includes a combination of two galvano mirrors including a galvano mirror that moves light (image forming light and position detection light) incident on the transfer optical device 30 in the X direction and a galvano mirror that moves the light in the Y direction. However, the present disclosure is not limited thereto. Furthermore, the transfer optical device/control device 31 includes a drive mechanism without angular velocity fluctuation such as a VCM, a harmonic drive, a crown gear, a traction drive, or an ultrasonic motor, and the transfer optical device 30 is driven (displaced) by the transfer optical device/control device 31. Note that a specific mechanism of the transfer optical device/control device 31 is not illustrated.

In Example 1, the eyepiece optical device 40 includes a known hologram element. Furthermore, in the display device of Example 1, the position display means 41 (position detection means), specifically, a retroreflective element, and more specifically, but not limited to, a retroreflective marker, is fixed to the eyepiece optical device 40. The retroreflective marker is a light reflecting component manufactured such that the incident light and the reflected light are in the same direction, and by using this characteristic, in principle, the return light always returns to the transfer optical device 30 even when the observer 70 moves. As a result, the position of the retroreflective marker can be detected regardless of the relative positional relationship between the transfer optical device 30 and the retroreflective marker. The retroreflective marker is desirably in a camouflage color with respect to the frame 90. Note that, when wavelength selectivity is imparted to the position display means 41, specifically, when the position display means 41 has a configuration or structure that reflects the position detection light and allows other light to pass therethrough, the position display means 41 may be attached to the hologram element or formed in the hologram element constituting the eyepiece optical device 40.

The eyepiece optical device 40 may be worn by the observer 70. Specifically, the eyepiece optical device 40 is attached to a frame 90 (for example, glasses type frame 90) mounted on the head of the observer 70. More specifically, the eyepiece optical device 40 is fitted into a rim provided in a front portion 91. The frame 90 includes the front portion 91 arranged in the front of the observer 70, two temple portions 93 rotatably attached to both ends of the front portion 91 via hinges 92, and tip portions (also referred to as tip cells, earmuffs, or ear pad) 94 attached to the distal end portions of the respective temple portions 93. In addition, a nose pad portion (not illustrated) is attached. The assembly of the frame 90 and the nose pad portion has substantially the same structure as ordinary eyeglasses.

In the image display devices of Example 1 or Examples 2 to 4 described later, light (for example, corresponding to the size of one pixel or one sub-pixel) emitted from the display device at a certain moment reaches a pupil 71 (specifically, a crystalline lens) of the observer 70, and the light passing through the crystalline lens finally forms an image in the retina of the observer 70.

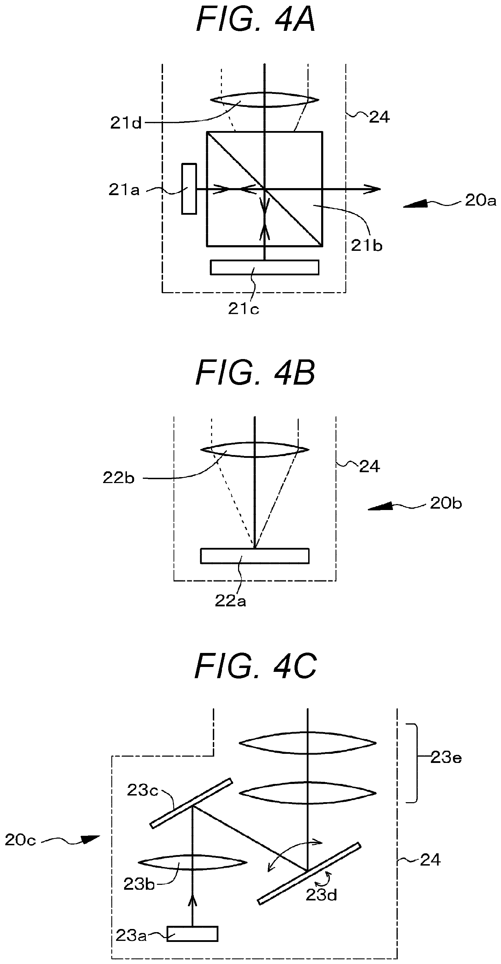

As illustrated in Fig. 4A, the image forming device 20 (hereinafter, the image forming device illustrated in Fig. 4A is referred to as an image forming device 20a) is the image forming device having the first configuration, and includes a plurality of pixels arranged in a two-dimensional matrix. Specifically, the image forming device 20a includes a reflection type spatial light modulation device and a light source 21a including a light emitting diode that emits white light. The entire image forming device 20a is housed in a housing 24 (in Fig. 4A, indicated by one-dot chain line), an opening portion (not illustrated) is provided in the housing 24, and light is emitted from an optical system 21d (parallel light emitting optical system, collimating optical system) through the opening portion. The reflection type spatial light modulation device includes a liquid crystal display device (LCD) 21c including LCOS as a light valve. Furthermore, a polarization beam splitter 21b that reflects and guides a part of the light from the light source 21a to the liquid crystal display device 21c, and allows a part of the light reflected by the liquid crystal display device 21c to pass therethrough and guides the light to the optical system 21d is provided. The liquid crystal display device 21c includes a plurality of (for example, 21d0 × 480) pixels (liquid crystal cells, liquid crystal display elements) arranged in a two-dimensional matrix. The polarization beam splitter 21b has a known configuration and structure. The non-polarized light emitted from the light source 21a collides with the polarization beam splitter 21b. In the polarization beam splitter 21b, the P-polarized component passes therethrough and is emitted out of the system. On the other hand, the S-polarized component is reflected by the polarization beam splitter 21b, incident on the liquid crystal display device 21c, reflected inside the liquid crystal display device 21c, and emitted from the liquid crystal display device 21c. Here, in the light emitted from the liquid crystal display device 21c, the light emitted from the pixel displaying "white" contains a large amount of P-polarized components, and the light emitted from the pixel displaying "black" contains a large amount of S-polarized components. Therefore, in the light emitted from the liquid crystal display device 21c and colliding with the polarization beam splitter 21b, the P-polarized component passes through the polarization beam splitter 21b and is guided to the optical system 21d. On the other hand, the S-polarized component is reflected by the polarization beam splitter 21b and returned to the light source 21a. The optical system 21d includes, for example, a convex lens, and in order to generate parallel light, the image forming device 20a (more specifically, liquid crystal display device 21c) is arranged at a location (position) of a focal length in the optical system 21d. The image emitted from the image forming device 20a reaches the retina of the observer 70 via the transfer optical device 30 and the eyepiece optical device 40.

Alternatively, as illustrated in Fig. 4B, the image forming device 20 (hereinafter, the image forming device illustrated in Fig. 4B is referred to as an image forming device 20b) includes an organic EL display device 22a. The image emitted from the organic EL display device 22a passes through a convex lens 22b, becomes parallel light, and reaches the retina of the observer 70 via the transfer optical device 30 and the eyepiece optical device 40. The organic EL display device 22a includes a plurality of (for example, 640 × 480) pixels (organic EL elements) arranged in a two-dimensional matrix.

Alternatively, as illustrated in Fig. 4C, the image forming device 20 (hereinafter, the image forming device illustrated in Fig. 4C is referred to as an image forming device 20c) which is the image forming device having the second configuration includes:

a light source 23a;
a collimating optical system 23b that collimates light emitted from the light source 23a into parallel light;
scanning means 23d that scans the parallel light emitted from the collimating optical system 23b; and
a relay optical system 23e that relays and emits the parallel light scanned by the scanning means 23d. Note that the entire image forming device 20c is housed in the housing 24 (in Fig. 4C, indicated by one-dot chain line), an opening portion (not illustrated) is provided in the housing 24, and light is emitted from the relay optical system 23e through the opening portion. The light source 23a includes a light emitting element, specifically, a light emitting diode or a semiconductor laser element. Then, the light emitted from the light source 23a is incident on the collimating optical system 23b having positive optical power as a whole, and is emitted as parallel light. Then, the parallel light is reflected by a total reflection mirror 23 c, and horizontal scanning and vertical scanning are performed by the scanning means 23d including the MEMS capable of making the micromirror rotatable in the two-dimensional direction and two-dimensionally scanning the incident parallel light, and one type of two-dimensional image is formed to generate a virtual pixel (the number of pixels can be, for example, the same as that of the image forming device 20a). Then, the light from the virtual pixel passes through the relay optical system (parallel light emission optical system) 23e including a known relay optical system, and the image emitted from the image forming device 20c reaches the retina of the observer 70 via the transfer optical device 30 and the eyepiece optical device 40. When the light source 23a includes a red light emitting element, a green light emitting element, and a blue light emitting element, the observer 70 can detect a color image, and when the light source 23a includes one type of light emitting element, the observer 70 can detect a monochromatic image.

As described above, the image generated by the image forming device 20 is incident on the transfer optical device (specifically, the movable mirror) 30 in the state of parallel light (alternatively, substantially parallel light), and is reflected by the transfer optical device 30, and then, a light flux directed to the eyepiece optical device 40 is achieved. In the eyepiece optical device 40, the pupil of the observer 70 is arranged at the position of the focal point (focal length f) of the eyepiece optical device 40, the projected light flux is condensed by the eyepiece optical device 40 and passes through the pupil of the observer 70 to be directly drawn on the retina, and the observer 70 can recognize the image.

In the display devices of Example 1 or Examples 2 to 4 described later, in addition to the position control of the image display device 10 in the X direction, the Y direction, and the Z direction by the placement unit 100, the transfer optical device/control device 31 causes the transfer optical device 30 to perform image projection control on the retina of the observer 70 in the horizontal direction ($\zeta$ direction) and/or the vertical direction ($\eta$ direction) of the image formed on the retina of the observer 70. In other words, the transfer optical device 30 may perform control to move light directed to the eyepiece optical device 40 in the X direction and/or the Y direction. In addition, the transfer optical device/control device 31 controls the transfer optical device 30 such that the image emitted from the image forming device 20 reaches the eyepiece optical device 40 under the control of the control unit 11 on the basis of the position information of the eyepiece optical device 40 detected by the second position detection device 50. However, the transfer optical device/control device 31 may control the transfer optical device 30 such that all of the images emitted from the image forming device 20 reach the eyepiece optical device 40, or may control the transfer optical device 30 such that some of the images emitted from the image forming device 20 reach the eyepiece optical device 40.

In the display devices of Example 1 or Examples 2 to 4 described later, in a case where the incident position of the light (return light) incident on the light receiving unit 54 from the first optical path synthesizing unit 52 on the light receiving unit 54 deviates from a predetermined position (reference position), the transfer optical device/control device 31 controls the position of the transfer optical device 30 to eliminate the deviation. This will be described later.

In a case where an image is observed with one eye, one display device may be used. In addition, in a case where an image is observed with both eyes, two display devices may be used, or one display device having the following configuration may be used. In other words, a structure including an image display device having two eyepiece optical devices 40, one image forming device, and two transfer optical devices 30 that branch an image emitted from one image forming device and emit the image to the two eyepiece optical devices 40 may be provided, or a structure including an image display device having two eyepiece optical devices 40, one image forming device, and one transfer optical device 30 on which an image emitted from one image forming device is incident, which divides the image into two images, and which emits the image to the two eyepiece optical devices 40 may be provided.

In the display device of Example 1, by rotating the motors 120, 130, and 140 under the control of the control unit 11 on the basis of the position information of the observer 70 or the position information of the eyepiece optical device 40 detected by the first position detection device 60, the image display device 10 placed on the placement table 110 is moved in the X direction, the Z direction, and the Y direction, and the image emitted from the image forming device 20 is controlled to reach the pupil 71 of the observer 70 via the eyepiece optical device 40.

Furthermore, in the display device of Example 1, the transfer optical device/control device 31 controls the transfer optical device 30 such that the image emitted from the image forming device 20 reaches the eyepiece optical device 40 under the control of the control unit 11 on the basis of the position information of the eyepiece optical device 40 detected by the second position detection device 50. Specifically, when the position of the eyepiece optical device 40 is changed (specifically, for example, when the observer 70 moves) from the state where the light (position detection light) from the first optical path synthesizing unit 52 is incident on the predetermined position (reference position) of the light receiving unit 54, the position at which the light (position detection light) from the first optical path synthesizing unit 52 is incident on the light receiving unit 54 is changed. A direction in the light receiving unit 54 corresponding to the X direction is referred to as "x direction", and a direction in the light receiving unit 54 corresponding to the Y direction is referred to as "y direction". Then, the position change of the eyepiece optical device 40 in the X direction is a change in the x direction of the position at which the light (position detection light) from the first optical path synthesizing unit 52 is incident on the light receiving unit 54. In addition, the position change of the eyepiece optical device 40 in the Y direction is a change in the y direction of the position at which the light (position detection light) from the first optical path synthesizing unit 52 is incident on the light receiving unit 54.

Therefore, as described above, the transfer optical device/control device 31 controls the position of the transfer optical device 30 such that the light (position detection light) from the first optical path synthesizing unit 52 is incident on a predetermined position of the light receiving unit 54, and reliably causes the image forming light from the transfer optical device 30 to be incident on the pupil 71 of the observer 70. In a case where the incident position of the light incident on the light receiving unit 54 from the first optical path synthesizing unit 52 on the light receiving unit 54 is deviated from a predetermined position, this "deviation" is detected as an error signal (a signal in which the voltage changes according to the deviation amount) in the light receiving unit 54. In other words, when a voltage value of a signal in a state where the light (return light of the position detection light) from the first optical path synthesizing unit 52 is incident on a predetermined position (reference position) of the light receiving unit 54 is $V_0$, and a voltage value of a signal in a state where an incident position of the light (return light) incident on the light receiving unit 54 from the first optical path synthesizing unit 52 on the light receiving unit 54 is deviated from the predetermined position (reference position) is $V_1$, the transfer optical device/control device 31 controls the position of the transfer optical device 30 such that $V_1$ becomes $V_0$.

As described above, the light receiving unit 54 has a structure in which the four photodiodes 54A, 54B, 54C, and 54D are arranged in a shape of "square having a crisscross therein" (structure arranged in 2 × 2). Then, the output voltage (to be exact, the output is a current, but it is common to arrange an I-V conversion element at a subsequent stage and convert the current into a voltage for handling, and thus the description of this part is omitted) changes depending on the light amount received by each of the photodiodes 54A, 54B, 54C, and 54D. Four voltage signals output from each of the photodiodes 54A, 54B, 54C, and 54D are converted into error signals through an arithmetic circuit of an operational amplifier provided in the control unit 11. Assuming that output signals from each of the photodiodes 54A, 54B, 54C, and 54D are $V_A$, $V_B$, $V_C$, and $V_D$, error signals $x_{Error}$ and $y_{Error}$ in the x direction (corresponding to the X direction) and the y direction (corresponding to the Y direction) can be calculated as follows.

$$x_{Error} = (V_A + V_C) - (V_B + V_D)$$

$$y_{Error} = (V_A + V_B) - (V_C + V_D)$$

Note that, since the magnitude of the error signal changes when the light amount changes, a signal obtained by normalizing the error signal in each direction with the sum signal (= $V_A$ + $V_B$ + $V_C$ + $V_D$) is often used as the actual control signal, but the description thereof will be omitted here.

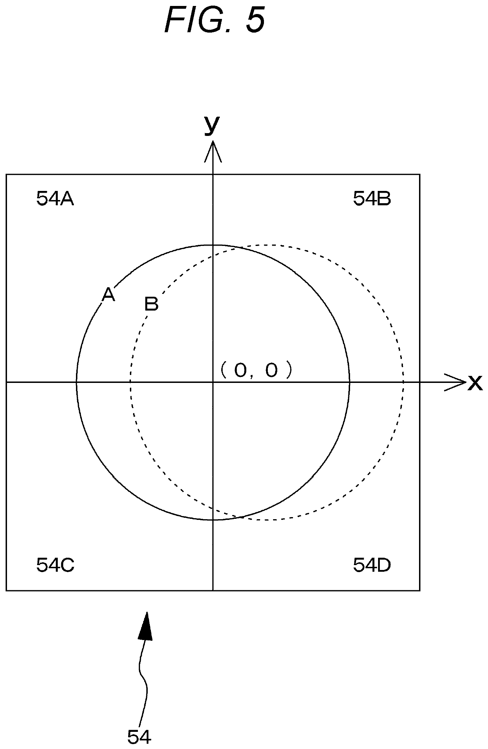

A relationship between the error signal and the positions of the transfer optical device 30 and the eyepiece optical device 40 will be described with reference to Fig. 5. Here, the position detection light spot to the light receiving unit 54 when the voltage value becomes $V_0$ is indicated by a circle of a solid line "A" in Fig. 5, and the position detection light spot to the light receiving unit 54 when the voltage value becomes $V_1$ is indicated by a circle of a dotted line "B" in Fig. 5. Then, conceptually, the transfer optical device/control device 31 controls the position of the transfer optical device 30 such that the circle "B" overlaps the circle "A". In other words, when the transfer optical device 30 is controlled such that the value of $x_{Error}$ becomes "0", the image forming center light is emitted from the transfer optical device 30 such that the image forming center light is incident on the center of the eyepiece optical device 40, for example. Conceptually, by controlling the transfer optical device 30 such that the center of gravity of the position detection light spot indicated by the dotted line "B" in Fig. 5 overlaps the center of the circle indicated by the solid line "A", the image forming center light can be made incident on, for example, the center of the eyepiece optical device 40. Conversely, when the value of $x_{Error}$ is set to have a certain value $V_{X\_offset}$ that is not "0", it is possible to create a system (state) in which a state where the position detection center light is incident deviating from the center of the light receiving unit 54 is a normal state. In other words, a case where the position detection light spot is positioned at the position indicated by the dotted line "B" in Fig. 5, can also be defined as a state where the image forming center light is incident on the center of the eyepiece optical device 40.

[Example 2]

Example 2 is a modification of Example 1. In Example 1, the first position detection device 60 and the second position detection device 50 are separate components. On the other hand, in Example 2, the second position detection device also serves as the first position detection device. In other words, the light source 51 constituting the second position detection device 50 is intensity-modulated at a high frequency, the position detection light colliding with and reflected by the eyepiece optical device 40 is received by the light receiving unit 54, and the distance to the eyepiece optical device 40 is obtained from the phase delay time or the like of the pulse wave. Specifically, the position detection light is modulated in the order of megahertz to gigahertz. Then, similarly to Example 1, the light (position detection light) emitted from the light source 51 reaches the eyepiece optical device 40 via the first optical path synthesizing unit 52, the second optical path synthesizing unit 53, and the transfer optical device 30, is returned to the transfer optical device 30 by the eyepiece optical device 40, is incident on the first optical path synthesizing unit 52 via the transfer optical device 30 and the second optical path synthesizing unit 53, is emitted from the first optical path synthesizing unit 52 in the direction different from that of the light source 51, and is incident on the light receiving unit 54. Then, signal processing is performed by dividing the signal output from the light receiving unit 54 into a high-frequency component corresponding to the modulation band (band for detecting the distance to the eyepiece optical device) and a low-frequency component of kilohertz or less (band for detecting the position of the eyepiece optical device). In other words, the distance to the eyepiece optical device 40 is detected on the basis of the TOF type or the indirect TOF type on the basis of the high-frequency component output from the light receiving unit 54. In addition, the position of the eyepiece optical device 40 is detected by the low-frequency component of kilohertz or less subjected to the low pass filtering process.

As described above, since the second position detection device serves as the first position detection device, the position of the eyepiece optical device can be obtained without increasing the number of components and the number of retroreflective elements. In some cases, the distance to the eyepiece optical device may be obtained on the basis of the size (spot size) of the position detection light in the light receiving unit.

Except for the above points, the configuration and structure of the display device of Example 2 can be similar to the configuration and structure of the display device described in Example 1, and thus the detailed description thereof will be omitted.

[Example 3]

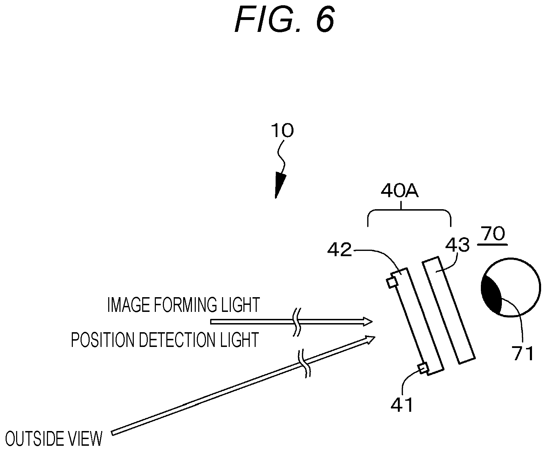

Example 3 is a modification example of Examples 1 and 2. In a case where superimposition of the image and the background is requested, it is desirable that the image display device 10 is not positioned in the front of the observer 70. In a case where the image display device constantly enters the field of view of the observer, there is a concern that the observer 70 cannot be immersed in the image or the outside view. As illustrated in a conceptual diagram in Fig. 6, in the display device of Example 3, the image display device and the like (not illustrated) are arranged at positions other than the front of the observer 70. As a result, the observer 70 can observe the image and the outside view in a state where the image display device or the like does not enter the field of view of the observer. In other words, the display device can be a semi-transmissive (see-through) type, and an outside view can be viewed through an eyepiece optical device 40A. However, when the image display device (specifically, the transfer optical device) is arranged at a position other than the front of the observer 70, the projection light is obliquely incident on the eyepiece optical device 40A. As a result, the focal position of the eyepiece optical device 40A deviates from the pupil 71 of the observer 70, and thus, there is a concern that the image does not reach the pupil 71 of the observer 70.

In order to cope with such a problem, the eyepiece optical device 40A includes a diffractive optical member. The diffractive optical member includes diffraction means 42 having a diffraction function and light condensing means 43 having a light condensing function. The diffraction means 42 is only required to include, for example, a transmission type volume hologram diffraction grating, and the light condensing means 43 is only required to include, for example, a hologram element. Alternatively, the diffraction means 42 and the light condensing means 43 may include one member. In addition, regarding the order of arrangement of the diffraction means 42 and the light condensing means 43, the light condensing means 43 may be arranged on the observer side, or the diffraction means 42 may be arranged on the observer side. The image forming light emitted from the transfer optical device (movable mirror) is deflected by the diffraction means 42, is changed in traveling angle (direction), is incident on the light condensing means 43, is condensed by the light condensing means 43, and forms an image on the retina of the observer 70. As the wavelength selectivity of the light condensing function, it is required to act only on the wavelength of the image forming light emitted from the image forming device. When the wavelength selectivity of the light condensing function is weakened and the eyepiece optical device 40A condenses light (for example, light of the outside view) having a wavelength other than the wavelength of light emitted from the image forming device, it becomes difficult for the observer 70 to observe the outside view.

Note that, in a case where a lens member manufactured by a general optical glass is used as the eyepiece optical device, there is no wavelength selectivity, and all the visible light is condensed and reaches the retina of the observer 70, such that the observer can observe only the projected image and cannot observe the outside view.

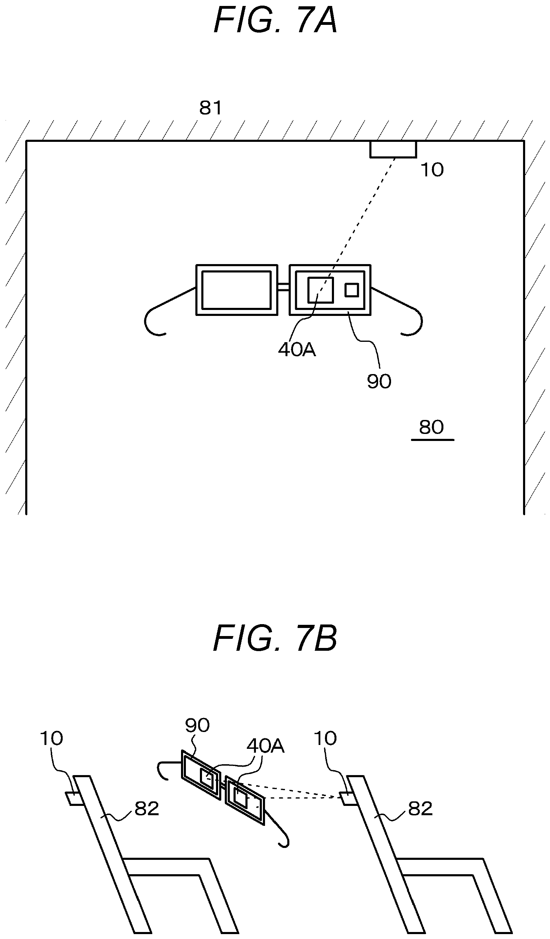

Fig. 7A illustrates a usage example of the display device of Example 3, and Fig. 7A is a schematic view of a state where the display device of Example 3 is used in a room. The image display device 10 is disposed on a wall surface 81 of a room 80. When the observer 70 stands at a predetermined position in the room 80, the image from the image display device 10 reaches the eyepiece optical device 40A, and the observer 70 can observe the image via the eyepiece optical device 40A. Alternatively, although not illustrated, an image display device may be disposed on a table, and when the observer approaches the table, the image from the image display device may reach the eyepiece optical device, and the observer may observe the image through the eyepiece optical device.

Alternatively, another usage example of the display device of Example 3 is illustrated in Fig. 7B, which is a schematic view of a state where the image display device 10 constituting the display device of Example 3 is disposed and used on the back surface of the back (backrest) of a seat 82. When the observer sits on the rear seat 82, an image is emitted from the image display device 10 disposed on the back surface of the back of the front seat 82 toward the eyepiece optical device 40A worn by the observer and reaches the eyepiece optical device 40A, and the observer 70 can observe the image via the eyepiece optical device 40A. More specifically, examples thereof include an example in which an image forming device for passengers is attached to the back surface of the back (backrest) of a seat of a vehicle or an airplane, and an example in which an image display device for spectators is attached to the back surface of the back (backrest) of a seat of a theater or the like. Note that the usage examples of the display device described above can also be applied to other examples.

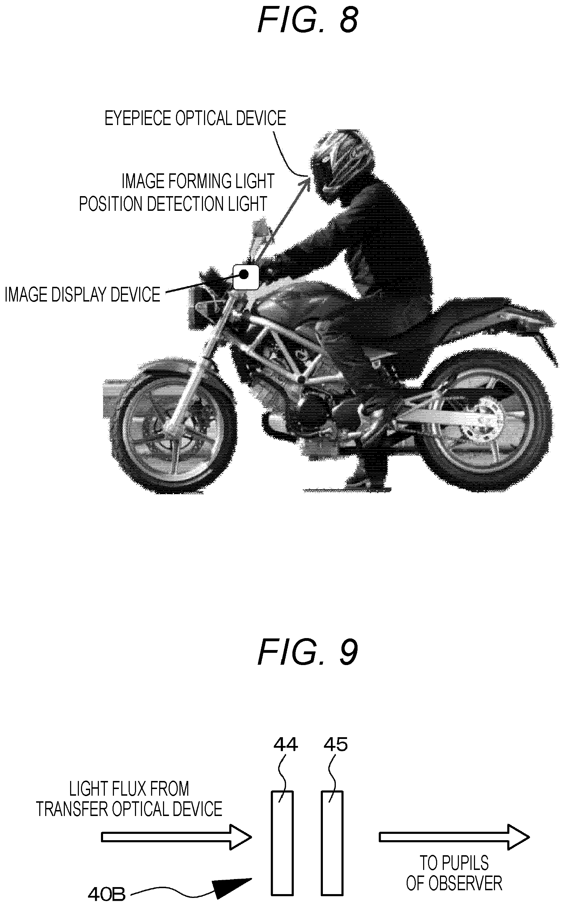

As illustrated in Fig. 8, the image display device 10 may be attached to a handle part of the motorcycle, and the eyepiece optical device 40A may be attached to a part of a full-face helmet worn by a motorcycle operator. Note that, in Fig. 8, the image forming light and the position detection light are indicated by arrows. It is known that handle parts of motorcycle vibrate at high frequencies of 100 Hertz or higher in some cases. Therefore, in a case where the second position detection device includes imaging devices of several tens of FPS to several hundreds of FPS, the detection of the position information of the eyepiece optical device by the second position detection device cannot be followed due to vibration transmitted to the image display device, and fine shaking cannot be completely removed from the image, which causes visually induced motion sickness. For example, by adopting the TOF type or the indirect TOF type distance measurement device as the first position detection device 60 and using, for example, the second position detection device 50 including the light receiving unit 54 having the plurality of photodiodes 54A, 54B, 54C, and 54D, it is possible to cope with the movement of the image display device in the order of 10 kilohertz to 100 kilohertz, and further effects are exerted for incorporation into a moving object such as a motorcycle. Examples of further application of the display device of Example 3 include an example in which the image display device is incorporated in an automobile and the eyepiece optical device is incorporated in a windshield for an automobile, and an example in which the eyepiece optical device is incorporated in a protective face mask or the like. In addition, in a case where the display device is used in such a vibrating environment, a drive mechanism having excellent responsiveness such as a VCM, a harmonic drive, or a traction drive is more suitable.

[Example 4]

Example 4 is a modification of Examples 1 to 3. As illustrated in the conceptual diagram in Fig. 9, in the display device of Example 4, an eyepiece optical device 40B includes a diffraction grating 45, and further includes a light condensing member 44 on the light incident side. Note that the light condensing member 44 may be provided between the diffraction grating 45 and the pupil 71 of the observer 70. Further, as a result, a structure equivalent to a structure in which there are a plurality of focal points of the eyepiece optical device 40B is obtained. In other words, for example, even in a case where the image emitted from the transfer optical device 30 described in Example 1 does not reach the pupil 71 of the observer 70 for various reasons, for example, the 1st-order diffracted light, the -1st-order diffracted light, and the like, instead of the 0th-order diffracted light of the diffraction grating 45, reach the pupil 71 of the observer 70, and accordingly, a system with higher robustness for the observer 70 can be realized. In other words, it is possible to realize a display device with higher robustness while reducing the burden on the observer 70. In addition, since a plurality of focal points can be prepared, the range in which the observer 70 can observe the image can be enlarged.
An aspect of dividing an image into three images in a horizontal direction, an aspect of dividing an image into three images in a vertical direction, an aspect of dividing an image into three images in a horizontal direction and three images in a vertical direction into a cross (an aspect of dividing an image into five images in total because one image including the central light path overlaps), an aspect of dividing an image into two images in a horizontal direction and two images in a vertical direction, that is, dividing an image into $2 \times 2 = 4$, and an aspect of dividing an image into three images in a horizontal direction and three images in a vertical direction, that is, dividing an image into $3 \times 3 = 9$, by the diffraction grating 45, can be exemplified.
Although the display device of the present disclosure has been described above on the basis of preferred Examples, the display device of the present disclosure is not limited to these Examples. The configuration and structure of the placement unit, the configuration and structure of the display device, and the configuration and structure of the image display device, the image forming device, the transfer optical device, or the eyepiece optical device can be appropriately changed. For example, in a case where the observer is at an inappropriate place when viewed from the display device, the display device may provide guidance by voice or image/video for guiding the observer to an appropriate place. The display device may include a plurality of image forming devices. In other words, the display device may include a plurality of image forming devices having different positions at which images are emitted, and may emit the same image from the plurality of image forming devices and receive one image of the plurality of images by one eyepiece optical device. Then, accordingly, the degree of freedom of the relative positional relationship between the image forming device and the observer can be increased. In other words, for example, when the observer is positioned at a predetermined position, the image from the image forming device can reach the eyepiece optical device, and the observer can observe the image through the eyepiece optical device, but the predetermined position can be enlarged. By arranging an optical member such as a lens between the transfer optical device and the eyepiece optical device and moving the optical member in a direction approaching the transfer optical device or a direction away from the transfer optical device along the axis of the image forming center light, it is also possible to assist the movement of the image display device in the Z direction by the placement unit.
Note that the present disclosure can also have the following configurations.

[A01] <<Display device>>

A display device including:

an eyepiece optical device;
an image display device including an image forming device and a transfer optical device that emits an image incident from the image forming device to the eyepiece optical device; and
a placement unit on which the image display device is placed, in which
the eyepiece optical device and the image display device are arranged to be spatially separated from each other,
the eyepiece optical device forms an image from the transfer optical device on a retina of an observer, and
when a horizontal direction of the image formed on the retina of the observer is defined as a $\zeta$ direction, a vertical

direction of the image is defined as an $\eta$ direction, a depth direction of the image is defined as a $\xi$ direction, a moving direction of the placement unit corresponding to the $\zeta$ direction is defined as an X direction, a moving direction of the placement unit corresponding to the $\eta$ direction is defined as a Y direction, and a moving direction of the placement unit corresponding to the $\xi$ direction is defined as a Z direction, the placement unit is capable of moving the image display device in at least one of the X direction, the Y direction, and the Z direction.

[A02] The display device according to [A01], in which the placement unit is capable of moving the image display device at least in the X direction and the Z direction.

[A03] The display device according to [A02], further including: a first position detection device that detects a position of the eyepiece optical device, in which

the placement unit moves the image display device on the basis of the position information of the observer or the position information of the eyepiece optical device, which is obtained by the first position detection device.

[A04] The display device according to [A03], in which the first position detection device includes a camera or a TOF sensor.

[A05] The display device according to any one of [A01] to [A04], in which the image display device further includes a transfer optical device/control device, and

the transfer optical device/control device controls the transfer optical device such that the image emitted from the image forming device reaches the eyepiece optical device.

[A06] The display device according to any one of [A01] to [A05], in which the image display device further includes a second position detection device that detects the position of the eyepiece optical device, and

the transfer optical device/control device controls the transfer optical device such that the image emitted from the image forming device reaches the eyepiece optical device on the basis of the position information of the eyepiece optical device detected by the second position detection device.

[A07] The optical device according to any one of [A01] to [A06], in which the transfer optical device includes a movable mirror.

[A08] The display device according to any one of [A01] to [A07], in which the eyepiece optical device is movable with respect to the placement unit.

[A09] The display device according to any one of [A01] to [A08], in which the eyepiece optical device is worn by the observer.

[A10] The display device according to [A09], in which the eyepiece optical device includes a hologram lens.

[A11] The display device according to any one of [A01] to [A10], in which the control unit controls the formation of the image in the image forming device on the basis of the position information of the observer or the position information of the eyepiece optical device, which is detected by the first position detection device, the second position detection device, or the first position detection device and the second position detection device.

[A12] The display device according to any one of [A01] to [A11], in which the second position detection device serves as the first position detection device.

[A13] The display device according to any one of [A01] to [A12], in which, by the transfer optical device/control device, the transfer optical device performs image projection control on the retina of the observer in the horizontal direction and the vertical direction of the image formed on the retina of the observer.

[A14] The optical device according to any one of [A01] to [A13], in which the transfer optical device includes a combination of two galvano mirrors.

[A15] The optical device according to any one of [A01] to [A14], in which a retroreflective element is attached to the eyepiece optical device.

[A16] The display device according to any one of [A01] to [A15], in which the eyepiece optical device includes a hologram element.

[A17] The display device according to any one of [A01] to [A15], in which the eyepiece optical device includes a diffractive optical member.

[A18] The display device according to any one of [A01] to [A15], in which the eyepiece optical device includes a light condensing member and a deflection member.

[A19] The display device according to any one of [A01] to [A18], in which the eyepiece optical device and the image display device are relatively movable.

[A20] The display device according to any one of [A01] to [A19], in which the eyepiece optical device is worn by an observer.

[B01] The display device according to any one of [A06] and [A07] to [A20], which cites [A06], in which the second position detection device includes

a light source,
a first optical path synthesizing unit,

a second optical path synthesizing unit, and
a light receiving unit,
an image emitted from the image forming device is formed on a retina of an observer via the second optical path synthesizing unit, a transfer optical device, and an eyepiece optical device, and
light emitted from the light source reaches the eyepiece optical device via the first optical path synthesizing unit, the second optical path synthesizing unit, and the transfer optical device, is returned to the transfer optical device by the eyepiece optical device, is incident on the first optical path synthesizing unit via the transfer optical device and the second optical path synthesizing unit, is emitted from the first optical path synthesizing unit in a direction different from the light source, and is incident on the light receiving unit.

[B02] The optical device according to [B01], in which, in a case where the incident position of the light incident on the light receiving unit from the first optical path synthesizing unit on the light receiving unit deviates from a predetermined position, the transfer optical device/control device controls the position of the transfer optical device to eliminate the deviation.

[B03] The display device according to [B01] or [B02], in which the light source emits infrared rays in an eye-safe wavelength range.

[B04] The display device according to any one of [B01] to [B03], in which the light emitted from the light source and incident on the first optical path synthesizing unit is divergent light.

[B05] The display device according to any one of [B01] to [B04], in which the light receiving unit is arranged at a position closer to the first optical path synthesizing unit than a position optically conjugate with the light source.

[B06] The display device according to any one of [B01] to [B05], in which the light receiving unit includes a position detection element, a multi-split photodiode, or a plurality of photodiodes.

REFERENCE SIGNS LIST

| | |
|---|---|
| 10 | Image display device |
| 11 | Control unit |
| 20, 20a, 20b, 20c | Image forming device |
| 21a | Light source |
| 21b | Polarization beam splitter |
| 21c | Liquid crystal display device (LCD) |
| 21d | Optical system |
| 22a | Organic EL display device |
| 22b | Convex lens |
| 23a | Light source |
| 23b | Collimating optical system |
| 23c | Total reflection mirror |
| 23d | Scanning means |
| 23e | Relay optical system |
| 24 | Housing |
| 30 | Transfer optical device |
| 31 | Transfer optical device/control device |
| 40, 40A, 40B | Eyepiece optical device |
| 41 | Position display means (retroreflective marker) |
| 42 | Diffraction means |
| 43 | Light condensing means |
| 44 | Light condensing member |
| 45 | Diffraction grating |
| 50 | Second position detection device |
| 51 | Light source |
| 52 | First optical path synthesizing unit |
| 53 | Second optical path synthesizing unit |
| 54 | Light receiving unit |
| 55 | Coupling lens |
| 56 | Lens member |
| 60 | First position detection device |

| 70 | Observer |
| 71 | Pupil |
| 80 | Room |
| 81 | Wall surface |
| 82 | Seat |
| 90 | Frame |
| 91 | Front portion |
| 92 | Hinge |
| 93 | Temple portion |
| 94 | Tip portion |
| 100 | Placement unit |
| 101 | Placement base |
| 110 | Placement table |
| 120, 130, 140 | Motor |
| 121, 131 | First guide unit |
| 122, 132 | Second guide unit |
| 123, 133 | Transmission mechanism |
| 141 | Guide unit |
| 142 | Transmission mechanism |
| 150 | Support base |
| 151 | Receiving member |

## Claims

1. A display device comprising:

   an eyepiece optical device;
   an image display device including an image forming device and a transfer optical device that emits an image incident from the image forming device to the eyepiece optical device; and
   a placement unit on which the image display device is placed, wherein
   the eyepiece optical device and the image display device are arranged to be spatially separated from each other,
   the eyepiece optical device forms an image from the transfer optical device on a retina of an observer, and
   when a horizontal direction of the image formed on the retina of the observer is defined as a $\zeta$ direction, a vertical direction of the image is defined as an $\eta$ direction, a depth direction of the image is defined as a $\xi$ direction, a moving direction of the placement unit corresponding to the $\zeta$ direction is defined as an X direction, a moving direction of the placement unit corresponding to the $\eta$ direction is defined as a Y direction, and a moving direction of the placement unit corresponding to the $\xi$ direction is defined as a Z direction, the placement unit is capable of moving the image display device in at least one of the X direction, the Y direction, and the Z direction.

2. The display device according to claim 1, wherein the placement unit is capable of moving the image display device at least in the X direction and the Z direction.

3. The display device according to claim 2, further comprising:

   a first position detection device that detects a position of the eyepiece optical device, wherein
   the placement unit moves the image display device on a basis of position information of the observer or position information of the eyepiece optical device, which is obtained by the first position detection device.

4. The display device according to claim 3, wherein the first position detection device includes a camera or a TOF sensor.

5. The display device according to claim 1, wherein

   the image display device further includes a transfer optical device/control device, and
   the transfer optical device/control device controls the transfer optical device such that the image emitted from the image forming device reaches the eyepiece optical device.

6. The display device according to claim 5, wherein

the image display device further includes a second position detection device that detects the position of the eyepiece optical device, and
the transfer optical device/control device controls the transfer optical device such that the image emitted from the image forming device reaches the eyepiece optical device on a basis of position information of the eyepiece optical device detected by the second position detection device.

7. The optical device according to claim 1, wherein the transfer optical device includes a movable mirror.

8. The display device according to claim 1, wherein the eyepiece optical device is movable with respect to the placement unit.

9. The display device according to claim 1, wherein the eyepiece optical device is worn by the observer.

10. The display device according to claim 9, wherein the eyepiece optical device includes a hologram lens.

# FIG. 1

# FIG. 2

# FIG. 3

EP 4 102 831 A1

## FIG. 4A

## FIG. 4B

## FIG. 4C

# FIG. 5

# FIG. 6

IMAGE FORMING LIGHT

POSITION DETECTION LIGHT

OUTSIDE VIEW

## FIG. 7A

81

10

40A

90

80

## FIG. 7B

90

40A

10

10

82

82

# FIG. 8

EYEPIECE OPTICAL DEVICE

IMAGE FORMING LIGHT
POSITION DETECTION LIGHT

IMAGE DISPLAY DEVICE

# FIG. 9

44    45

LIGHT FLUX FROM
TRANSFER OPTICAL DEVICE

TO PUPILS
OF OBSERVER

40B

# FIG. 10

EYEPIECE OPTICAL DEVICE

EYEBALL OF OBSERVER

INCIDENT ANGLE

TRANSFER OPTICAL DEVICE

IMAGE FORMING LIGHT

# FIG. 11

（A）

（B）

◆NORMAL

◆FOLLOWING WHEN DEVIATED TO SIDE

IMAGE FORMING LIGHT

EYEPIECE OPTICAL DEVICE

EYEBALL OF OBSERVER

## INTERNATIONAL SEARCH REPORT

| | International application No. |
|---|---|
| | PCT/JP2021/006533 |

**A. CLASSIFICATION OF SUBJECT MATTER**
Int. Cl. H04N5/64(2006.01)i, G02B27/02(2006.01)i
FI: H04N5/64 511A, G02B27/02 Z, H04N5/64 501D

According to International Patent Classification (IPC) or to both national classification and IPC

**B. FIELDS SEARCHED**

Minimum documentation searched (classification system followed by classification symbols)
Int. Cl. H04N5/64, G02B27/02

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/181482 A1 (SONY SEMICONDUCTOR SOLUTIONS CORPORATION) 26 September 2019, paragraphs [0002], [0004], [0005], [0041], [0043], [0045], [0053]-[0058], [0108], fig. 1A, 1B | 1-10 |
| Y | WO 2020/003791 A1 (SONY SEMICONDUCTOR SOLUTIONS CORPORATION) 02 January 2020, paragraphs [0003], [0005], [0006], [0018]-[0023], [0031]-[0035], [0049]-[0051], fig. 1, 5, 6, 18, 20 | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.04.2021 | 11.05.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

| International application No. |
|---|
| PCT/JP2021/006533 |

| Patent Documents referred to in the Report | Publication Date | Patent Family | Publication Date |
|---|---|---|---|
| WO 2019/181482 A1 | 26.09.2019 | (Family: none) | |
| WO 2020/003791 A1 | 02.01.2020 | (Family: none) | |

Form PCT/ISA/210 (patent family annex) (January 2015)

**EP 4 102 831 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005309264 A